(19) Europäisches Patentamt
European Patent Office
Office européen des brevets

(11) EP 2 865 438 A1

(12) **EUROPEAN PATENT APPLICATION**
published in accordance with Art. 153(4) EPC

(43) Date of publication:
**29.04.2015 Bulletin 2015/18**

(21) Application number: **13806721.0**

(22) Date of filing: **17.06.2013**

(51) Int Cl.:
***B01D 53/22*** (2006.01) ***B01D 63/00*** (2006.01)
***B01D 63/10*** (2006.01) ***B01D 69/00*** (2006.01)
***B01D 69/10*** (2006.01)

(86) International application number:
**PCT/JP2013/066634**

(87) International publication number:
**WO 2013/191147 (27.12.2013 Gazette 2013/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.06.2012 JP 2012139001**
**10.09.2012 JP 2012198702**
**27.03.2013 JP 2013067015**

(71) Applicant: **FUJIFILM Corporation**
**Tokyo 106-8620 (JP)**

(72) Inventor: **ISHIZUKA, Kenichi**
**Ashigarakami-gun**
**Kanagawa 258-8577 (JP)**

(74) Representative: **Hoffmann Eitle**
**Patent- und Rechtsanwälte PartmbB**
**Arabellastraße 30**
**81925 München (DE)**

# (54) ACIDIC GAS SEPARATION MODULE AND PRODUCTION METHOD THEREFOR, ACIDIC GAS SEPARATION LAYER, PRODUCTION METHOD AND FACILITATED TRANSPORT MEMBRANE THEREFOR, AND ACIDIC GAS SEPARATION SYSTEM

(57) Provided is an acidic gas separation module 10 which contains: a permeated gas collection tube 12 having through-hole 12As formed on the wall thereof; a layered body 14 in which a feed gas flow path member 30 through which an acidic gas-containing source gas is fed, an acidic gas separation layer 32 that contains a carrier reacting with the acidic gas and a hydrophilic compound supporting the carrier, and a permeated gas flow path member 36 through which the acid gas that has reacted with the carrier and permeated through the acidic gas separation layer 32 flows toward the through-hole 12As are layered; and heat/moisture-resistant adhesive parts 34 and 40 which adhere the both side edges of the acidic gas separation layer 32 and the permeated gas flow path member 36 along the circumferential direction in a state where the layered body 14 is wound in layers on the permeated gas collection tube 12, the adhesive parts 34 and 40 also adhering the circumferential direction edges of the acidic gas separation layer 32 and the permeated gas flow path member 36.

Fig 3

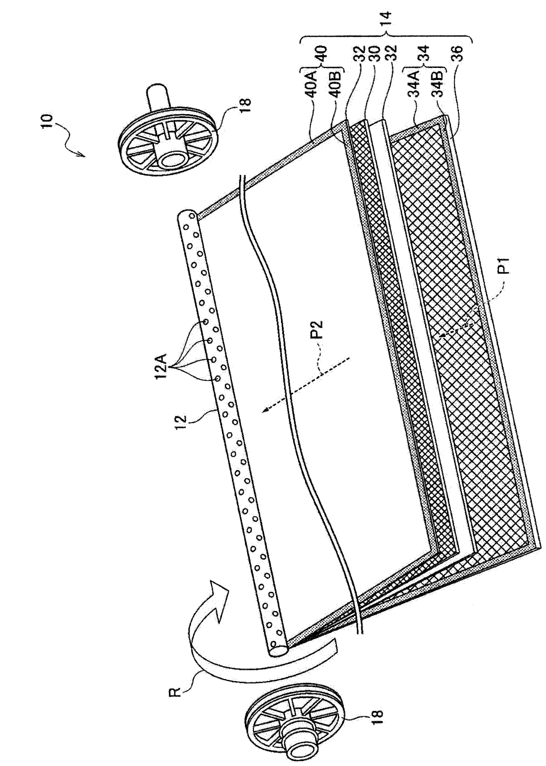


EP 2 865 438 A1

## Description

BACKGROUND

Technical Field

The present invention relates to: an acidic gas separation module and a production method thereof; an acidic gas separation layer, a production method and a facilitated transport membrane thereof; and an acidic gas separation system.

Related Art

In recent years, an advance has been made in the technology for selective separation of an acidic gas contained in a material gas. For example, acidic gas separation modules, which separate an acidic gas from a material gas using an acidic gas separation membrane that selectively allows the acidic gas to permeate therethrough, have been developed.

Japanese Patent Application Laid-Open (JP-A) No. H4-215824 discloses an acidic gas separation module in which a layered body containing an acidic gas separation membrane is fixed on a permeated gas collection tube having through-holes formed on the wall thereof via an adhesive portion with the layered body being wound in layers on the permeated gas collection tube. In JP-A No. H4-215824, as an acidic gas separation membrane, a so-called "dissolution-diffusion membrane", which performs separation utilizing the differences in the solubility and the diffusibility in the membrane between an acidic gas and a substance to be separated, is employed.

In Japanese Patent No. 4621295, JP-A No. 2009-082850 and Japanese Patent No. 4621295, acidic gas separation modules in which a layered body containing an acidic gas separation membrane is arranged inside a tube (frame) are disclosed. In the specification of Japanese Patent No. 4621295, as the acidic gas separation membrane, a so-called "facilitated transport membrane", which contains therein a carrier that transports an acidic gas to the other side of the membrane, is employed.

SUMMARY OF INVENTION

However, in the acidic gas separation module of JP-A No. H4-215824, since a dissolution-diffusion membrane which generally has a lower solubility of a substance to be separated and a slower acidic gas permeation rate than a facilitated transport membrane is used, the acidic gas separation efficiency is low. Particularly, in the separation of an acidic gas from a material gas containing water vapor at a high temperature of 100°C or higher, the dissolution-diffusion membrane and the adhesive portion are deteriorated by heat and moisture, so that the separation efficiency is reduced.

In the acidic gas separation module disclosed in the specification of Japanese Patent No. 4621295, although a facilitated transport membrane is used as the acidic gas separation membrane, since this membrane is arranged inside a tube, it is difficult to increase the membrane surface area. Therefore, unless the number of modules is increased, the acidic gas separation efficiency remains low.

Incidentally, in a facilitated transport membrane, usually, a carrier, which is presented in the facilitated transport membrane, composed of an alkali metal, such as cesium carbonate, reacts with water to release $OH^-$ and this $OH^-$ reacts with $CO_2$, whereby $CO_2$ is selectively incorporated into the membrane. Meanwhile, since this membrane requires mediation by water, its deliquescent properties present a problem. Specifically, dew condensation may occur on the membrane surface, and blocking may occur when rolling up the membrane after continuous membrane formation. Consequently, the ease of handling the membrane in the preparation of an acidic gas separation module is deteriorated and the production suitability is thus impaired. In addition, excessive deliquescence is a factor that interferes with the gas separation operation.

The present invention was made in view of the above-described circumstances, and an object of the invention is to provide an acidic gas separation module which exhibits a high acid gas separation efficiency even when separating an acidic gas from a material gas containing water vapor at a high temperature; a method of producing the acidic gas separation module; and an acidic gas separation system.

Another object of the invention is to provide an acidic gas separation layer which suppresses the deliquescent property of a facilitated transport membrane and exhibits excellent production suitability and usability while maintaining high acidic gas separation performance, a production method and a facilitated transport membrane thereof; an acidic gas separation module containing the acidic gas separation layer; and an acidic gas separation system.

The above-described problems of the invention were solved by the following means.

<1> An acidic gas separation module, containing: a permeated gas collection tube having through-holes formed at a tube wall thereof; a layered body in which are layered: a feed gas flow path member through which an acidic gas-containing material gas is fed; an acidic gas separation layer that contains a carrier that reacts with the acidic gas contained in the material gas passing through the feed gas flow path member, and a hydrophilic compound supporting the carrier; and a permeated gas flow path member through which the acid gas that has reacted with the carrier and permeated through the acidic gas separation layer flows toward the through-holes ; and an adhesive portion which adheres both side edges of the acidic gas separation layer and the permeated gas flow path member along a circumferential direction in a state in which the through-holes are covered with the permeated gas flow path member and the layered body is wound in layers on the permeated gas collection tube, to adhere circumferential direction edges of the acidic gas separation layer and the permeated gas flow path member.

<2> The acidic gas separation module according to <1>, wherein the carrier contains at least one selected from the group consisting of alkali metal compounds, nitrogen compounds and sulfur compounds.

<3> The acidic gas separation module according to <1> or <2>, wherein the acidic gas separation layer contains: a facilitated transport membrane which contains the hydrophilic compound and the carrier and is arranged at the feed gas flow path member side; and a porous support which is arranged on the permeated gas flow path member side and supports the facilitated transport membrane, and wherein the hydrophilic compound has a cross-linked structure.

<4> The acidic gas separation module according to <3>, wherein at least 10% of pores of the porous support are filled by the adhesive portion.

<5> The acidic gas separation module according to any one of <1> to <4>, wherein the acidic gas separation layer contains at least one selected from: a compound selected from the group consisting of compound that contains a hydrophilic group and an alkyl group having from 3 to 20 carbon atoms or a fluoroalkyl group having from 3 to 20 carbon atoms, and a compound having a siloxane structure; or polymer particles having an average particle diameter of 0.01 μm to 1,000 μm and a specific gravity of 0.5 g/cm$^3$ to 1.3 g/cm$^3$.

<6> The acidic gas separation module according to any one of <1> to <5>, wherein the carrier contains two or more alkali metal compounds.

<7> The acidic gas separation module according to <6>, wherein the carrier contains: a first alkali metal compound that is deliquescent; and a second alkali metal compound that is less deliquescent, and has a lower specific gravity, than the first alkali metal compound.

<8> The acidic gas separation module according to any one of <1> to <7>, wherein a slit is formed at the tube wall along the axial direction; and a tip of the permeated gas flow path member is inserted into and fixed in the slit.

<9> The acidic gas separation module according to any one of <1> to <8>, wherein the permeated gas collection tube has an outlet arranged at one end of the tube, from which the acidic gas collected from the through-holes is discharged, an inlet arranged at the other end of the tube, through which a sweep gas is fed, and a blocking member which is arranged between the outlet and the inlet and provides blockage inside the tube; a partition adhesive portion is formed in the circumferential direction between circumferential direction adhesive portions of the adhesive portion that are adhered along the circumferential direction, and at an outer peripheral side of the blocking member, the partition adhesive portion not being in contact with an axial direction adhesive portion of the adhesive portion that adheres the circumferential direction edges, and having a narrower width than the circumferential direction adhesive portions; and a flow path through which the sweep gas flows is formed between the circumferential direction adhesive portions and the axial direction adhesive portion.

<10> A gas separation system, containing the acidic gas separation module according to any one of <1> to <9>.

<11> A method of producing an acidic gas separation layer having a facilitated transport membrane on a porous support, the method including coating a coating liquid that contains a hydrophilic compound and two or more alkali metal compounds onto the porous support to form the facilitated transport membrane.

<12> The method of producing an acidic gas separation layer according to <11>, wherein one of the alkali metals of the two or more alkali metal compounds is potassium.

<13> The method of producing an acidic gas separation layer according to <11> or <12>, wherein the two or more alkali metal compounds include potassium carbonate, potassium bicarbonate or potassium hydroxide.

<14> The method of producing an acidic gas separation layer according to any one of <11> to <13>, wherein a total mass ratio of the two or more alkali metal compounds is from 25% by mass to 85% by mass with respect to a total mass of the hydrophilic compound and the two or more alkali metal compounds.

<15> The method of producing an acidic gas separation layer according to any one of <11> to <14>, wherein the hydrophilic compound is a polyvinyl alcohol or a copolymer of polyvinyl alcohol and polyacrylic acid.

<16> The method of producing an acidic gas separation layer according to any one of <11> to <15>, wherein one of the two or more alkali metal compounds is unevenly distributed at a surface side of the facilitated transport membrane.

<17> The method of producing an acidic gas separation layer according to <16>, wherein the alkali metal compound unevenly distributed at the surface side of the facilitated transport membrane is a potassium salt or a potassium ion.

<18> The method of producing an acidic gas separation layer according to <16> or <17>, wherein the alkali metal

compound unevenly distributed at the surface side of the facilitated transport membrane is contained in an amount of from 0.01% by mass to 10% by mass with respect to a total solid content.

<19> An acidic gas separation layer, having a facilitated transport membrane on a porous support, wherein the facilitated transport membrane contains a hydrophilic compound and two or more alkali metal compounds.

<20> The acidic gas separation layer according to <19>, wherein a total mass ratio of the two or more alkali metal compounds is from 25% by mass to 85% by mass with respect to a total mass of the hydrophilic compound and the two or more alkali metal compounds.

<21> The acidic gas separation layer according to <19> or <20>, wherein one of the two or more alkali metal compounds is unevenly distributed at a surface side of the facilitated transport membrane.

<22> The acidic gas separation layer according to <21>, wherein the alkali metal compound unevenly distributed at the surface side of the facilitated transport membrane is contained in an amount of from 0.01% by mass to 10% by mass with respect to a total solid content.

<23> An acid gas separation module, containing the acidic gas separation layer according to any one of <19> to <22>.

<24> An acidic gas separation system, containing the acidic gas separation module according to <23>.

<25> A facilitated transport membrane of an acidic gas separation layer, containing a hydrophilic compound and two or more alkali metal compounds.

According to the invention, an acidic gas separation module which exhibits a high acid gas separation efficiency even when separating an acidic gas from a material gas containing water vapor at a high temperature as well as a method of producing the acidic gas separation module can be provided.

Further, according to the present invention, an acidic gas separation layer which suppresses the deliquescent property of a facilitated transport membrane and exhibits excellent production suitability and usability while maintaining high acidic gas separation performance, a production method and a facilitated transport membrane thereof; an acidic gas separation module containing the acidic gas separation layer; and an acidic gas separation system can also be provided.

BRIEF DESCRIPTION OF DRAWINGS

FIG. 1 is a partially cut-away schematic constitutional diagram showing one embodiment of an acidic gas separation module; FIG. 2 is a cross-sectional view taken along the arrow A-A shown in FIG. 1 and shows the layered structure of a layered body; FIG. 3 is a drawing that shows the condition of the acidic gas separation module before the layered body is wound on a permeated gas collection tube, as well as one embodiment of regions where adhesive portions are formed; FIG. 4A is a drawing that shows a production step of the acidic gas separation module; FIG. 4B is a drawing that shows a production step of the acidic gas separation module following the step shown in FIG. 4A; FIG. 4C is a drawing that shows a production step of the acidic gas separation module following the step shown in FIG. 4B; FIG. 5 is a drawing that shows a modification example of the acidic gas separation module shown in FIG. 3; FIG. 6 is a drawing that shows a modification example of the acidic gas separation module shown in FIG. 5; FIG. 7 is a drawing that shows another modification example of the acidic gas separation module shown in FIG. 5; FIG. 8 is a cross-sectional view showing a cross-section of the acidic gas separation layer; and FIG. 9 provides an electron micrograph showing a cross-section of the acidic gas separation layer sample prepared in Reference Example (sample 101) and EDX images showing distribution of elements.

DETAILED DESCRIPTION OF THE INVENTION

Mode for Carrying Out the Invention

The acidic gas separation module according to an embodiment of the invention and the production method thereof will now be concretely described referring to the appended drawings. It is noted here that, in the drawings, the members (constituents) having the same or corresponding function are assigned with the same symbol and descriptions thereof are omitted as appropriate.

<Acidic Gas Separation Module>

FIG. 1 is a partially cut-away schematic constitutional diagram showing one embodiment of an acidic gas separation module 10.

As shown in FIG. 1, the acidic gas separation module 10, in its basic structure, is constituted such that, with a single or plural layered body 14s being wound around a permeated gas collection tube 12, the outermost periphery of the layered body 14(s) is covered with a cover layer 16 and an anti-telescoping plate 18 is attached to both ends of each

unit.

In the acidic gas separation module 10 constituted in this manner, when an acidic gas-containing material gas 20 is fed to the layered body 14 from the side of one end 10A thereof, the material gas 20 is separated into an acidic gas 22 and a residual gas 24 by the below-described constitution of the layered body 14, and these gases 22 and 24 are separately discharged to the side of the other end 10B.

The permeated gas collection tube 12 is a cylindrical tube having plural through-hole 12As formed on the wall thereof. The permeated gas collection tube 12 is closed at one end (on the side of the end 10A) but is open at the other end (on the side of the other end 10B), forming an outlet 26 through which the acidic gas 22 that permeated through the layered body 14 and was collected via the through-hole 12As, such as carbon dioxide gas, is discharged.

In the below-described region sealed with an adhesive, the ratio of the through-hole 12 As relative to the surface area of the permeated gas collection tube 12 (aperture ratio) is preferably from 1.5% to 80%, more preferably from 3% to 75%, still more preferably from 5% to 70%. From the practical standpoint, the aperture ratio is still more preferably from 5% to 25%.

By controlling the aperture ratio to be not less than the lower limit value, the acidic gas 22 can be collected efficiently. Further, by controlling the aperture ratio to be not higher than the upper limit value, the tube strength can be improved and sufficient processing suitability can be ensured.

The shape of the through-hole 12As is not particularly restricted; however, the through-hole 12 As preferably have a shape of a 0.5 to 20-mmφ circular hole. It is also preferred that the through-hole 12As are uniformly arranged with respect to the surface of the permeated gas collection tube 12.

The coverlayer 16 is composed of a blocking material capable of blocking the material gas 20 passing through the acidic gas separation module 10. It is preferred that the blocking material also has heat/moisture resistance. In the present embodiment, unless otherwise specified, the "heat resistance" of the "heat/moisture resistance" means that the material has a heat resistance of not lower than 60°C. Specifically, the "heat resistance of not lower than 60°C" means that, even after the material is stored for 2 hours at a temperature of 60°C or higher, the material maintains its pre-storage form and curling caused by heat shrinkage or heat-melting, which can be visually confirmed, does not occur. Further, the "moisture resistance" of the "heat/moisture resistance" means that, even after the material is stored for 2 hours under conditions of 40°C and 80% RH, the material maintains its pre-storage form and curling caused by heat shrinkage or heat-melting, which can be visually confirmed, does not occur.

The anti-telescoping plate 18 has an outer ring 18A, an inner ring 18B and radial spoke 18Cs, and it is preferred that these components are each made of a heat/moisture resistant material.

Specific examples of the material of the anti-telescoping plate 18 include metal materials (such as SUS, aluminum, aluminum alloy, tin and tin alloy); resin materials (such as polyethylene resins, polypropylene resins, aromatic polyamide resins, nylon 12, nylon 66, polysulfine resins, polytetrafluoroethylene resins, polycarbonate resins, acryl-butadiene-styrene resins, acryl-ethylene-styrene resins, epoxy resins, nitrile resins, polyether ether ketone resins (PEEK), polyacetal resins (POM) and polyphenylene sulfide (PPS)); fiber-reinforced plastics of these resins (Examples of the fiber include glass fibers, carbon fibers, stainless steel fibers and aramid fibers, and long fibers are particularly preferred. Specific examples thereof include long glass fiber-reinforced polypropylenes and long glass fiber-reinforced polyphenylene sulfides.); and ceramics (such as zeolite and alumina).

The layered body 14 is constituted such that a feed gas flow path member 30 is sandwiched by an acidic gas separation layer 32 that is folded in half with the below-described facilitated transport membrane facing inside and, on the inner side thereof in the radial direction, the acidic gas separation layer 32 is adhered to a permeated gas flow path member 36 via an adhesive portion 34 infiltrating thereto.

The number of the layered body 14 to be wound on the permeated gas collection tube 12 is not particularly restricted, and it may be one or more. By increasing the number of the layered body 14s (number of layers), the surface area of a facilitated transport membrane 32A can be increased. Consequently, the amount of the acid gas 22 that can be separated by one module can be increased. Alternatively, in order to increase the surface area of the membrane, the length of the layered body 14 may be increased.

In cases where plural layered body 14s are used, the number thereof is preferably 50 or less, more preferably 45 or less, still more preferably 40 or less. When the number of the layered body 14s is not greater than the above-described value, the layered body 14s can be easily wound and the processing suitability is thus improved.

Further, the width of the layered body 14 is not particularly restricted, and it is preferably from 50 mm to 10,000 mm, more preferably from 60 mm to 9,000 mm, still more preferably from 70 mm to 8,000 mm. From the practical standpoint, the width of the layered body 14 is preferably from 200 mm to 2,000 mm.

By controlling the width of the layered body 14 to be not less than the lower limit value, even when coated (sealed) with an adhesive, the facilitated transport membrane 32A can maintain an effective surface area. Also, by controlling the width to be not greater than the upper limit value, the horizontality of the winding core can be maintained and the occurrence of distorted winding can thus be inhibited.

FIG. 2 is a cross-sectional view taken along the arrow A-A shown in FIG. 1 and shows the layered structure of

the layered body.

As shown in FIG. 2, the layered body 14 is adhered with each other via an adhesive portion 40 infiltrating into the acidic gas separation layer 32 and layered around the permeated gas collection tube 12.

In layered body 14, specifically, the permeated gas flow path member 36, the acidic gas separation layer 32, the feed gas flow path member 30 and the acidic gas separation layer 32 are layered in the order mentioned from the permeated gas collection tube 12 side.

By the layering of these components, the material gas 20 containing the acidic gas 22 is fed from an edge of the feed gas flow path member 30, and the acidic gas 22, which permeated through the acidic gas separation layer 32 of this embodiment that is compartmentalized by the cover layer 16 and thereby separated, is accumulate into the permeated gas collection tube 12 via the permeated gas flow path member 36 and the through-hole 12As and then recovered from the outlet 26 connected to the permeated gas collection tube 12. Further, in the acidic gas separation module 10, the residual gas 24, which has passed through the voids of the feed gas flow path member 30 and the like and been separated from the acidic gas 22, is discharged from the edges of the feed gas flow path member 30 and the acidic gas separation layer 32 on the outlet 26 side.

(Feed Gas Flow Path Member)

The feed gas flow path member 30 is a member through which the material gas 20 containing the acidic gas 22 is fed from one end 10A of the acidic gas separation module 10. Since it is preferred that the feed gas flow path member 30 has a function as a spacer and creates turbulence in the material gas 20, a net-form member is preferably employed. As the flow path of the gas varies depending on the shape of the net, the unit cell shape of the net can be selected from rhomboid, parallelogram or the like in accordance with the intended use. Further, assuming that the material gas 20 containing water vapor at a high temperature is fed therethrough, it is preferred that the feed gas flow path member 30 has heat/moisture resistance in the same manner as the below-described acidic gas separation layer 32.

The material of the feed gas flow path member 30 is not restricted at all, and examples thereof include papers; high-quality papers; coated papers; cast-coated papers; synthetic papers; resin materials such as cellulose, polyester, polyolefin, polyamide, polyimide, polysulfone, aramid and polycarbonate; and inorganic materials such as metals, glass and ceramics. Examples of suitable resin materials include polyethylene, polystyrene, polyethylene terephthalate, polytetrafluoroethylene (PTFE), polyether sulfone (PES), polyphenylene sulfide (PPS), polysulfone (PSF), polypropylene (PP), polyimide, polyether imide, polyether ether ketone and polyvinylidene fluoride.

Further, examples of materials that are preferred from the standpoint of the heat/moisture resistance include inorganic materials such as ceramics, glass and metals; and organic resin materials having a heat resistance of 100°C or higher. For example, high-molecular-weight polyester, polyolefin, heat-resistant polyamide, polyimide, polysulfone, aramid, polycarbonate, metals, glass and ceramics can be suitably used. More specifically, it is preferred that the feed gas flow path member 30 is constituted to contain at least one material selected from the group consisting of ceramics, polytetrafluoroethylene, polyvinylidene fluoride, polyether sulfone, polyphenylene sulfide, polysulfone, polyimide, polypropylene, polyether imide, and polyether ether ketone.

The thickness of the feed gas flow path member 30 is not particularly restricted, and it is preferably from 100 $\mu$m to 1,000 $\mu$m, more preferably from 150 $\mu$m to 950 $\mu$m, still more preferably from 200 $\mu$m to 900 $\mu$m.

(Acidic Gas Separation Layer)

The acidic gas separation layer 32 contains the facilitated transport membrane 32A arranged on the feed gas flow path member 30 side, and a porous support 32B which supports the facilitated transport membrane 32A and is arranged on the permeated gas flow path member 36 side.

(Facilitated Transport Membrane)

The facilitated transport membrane 32A contains at least: a carrier which reacts with the acidic gas 22 contained in the material gas 20 passing through the feed gas flow path member 30; and a hydrophilic compound supporting the carrier, and has a function of selectively allowing the acidic gas 22 from the material gas 20 to permeate therethrough. In this embodiment, since the facilitated transport membrane 32A generally has superior heat resistance than a dissolution-diffusion membrane, the acidic gas 22 can be selectively allowed to permeate therethrough even under a temperature condition of, for example, 100°C to 200°C. Further, even when the material gas 20 contains water vapor, since the water vapor is absorbed by the hydrophilic compound and retained by the facilitated transport membrane 32A containing the hydrophilic compound, the transport by the carrier is further facilitated, so that a higher separation efficiency is attained as compared to a case where a dissolution-diffusion membrane is used.

The surface area of the facilitated transport membrane 32A is not particularly restricted, and it is preferably

from 0.01 $m^2$ to 1,000 $m^2$, more preferably from 0.02 $m^2$ to 750 $m^2$, still more preferably from 0.025 $m^2$ to 500 $m^2$. From the practical standpoint, the membrane surface area is preferably from 1 $m^2$ to 100 $m^2$.

By controlling the membrane surface area to be not less than the lower limit value, the acidic gas 22 can be efficiently separated with respect to the membrane surface area. Further, by controlling the membrane surface area to be not larger than the upper limit value, easy processability is attained.

The length of the facilitated transport membrane 32A (total length prior to being folded in half) is not particularly restricted, and it is preferably from 100 mm to 10,000 mm, more preferably from 150 mm to 9,000 mm, still more preferably from 200 mm to 8,000 mm. From the practical standpoint, the length is preferably from 800 mm to 4,000 mm.

By controlling the length to be not less than the lower limit value, the acidic gas 22 can be efficiently separated with respect to the membrane surface area. Further, by controlling the length to be not longer than the upper limit value, occurrence of winding distortion is inhibited and easy processability is thus attained.

The thickness of the facilitated transport membrane 32A is not particularly restricted, and it is preferably from 1 to 200 μm, more preferably from 2 to 175 μm. It is preferred to control the thickness in this range because sufficient gas permeability and separation selectivity can be thereby realized.

From the standpoint of the heat resistance, the hydrophilic compound-containing facilitated transport membrane 32A has preferably a cross-linked structure. The following descriptions are provided from this standpoint referring to a preferred embodiment.

The facilitated transport membrane 32A is constituted by, for example, a hydrophilic compound layer having a cross-linked structure that contains a hydrolysis-resistant bond selected from the below-described group (B) and is formed by a single or plural cross-linkable groups selected from the below-described group (A). Particularly, from the standpoint of attaining excellent acidic gas separation characteristics and excellent durability, the facilitated transport membrane 32A is preferably constituted by a hydrophilic compound layer having a cross-linked structure that contains a hydrolysis-resistant bond selected from the below-described group (B) and is formed by a single cross-linkable group selected from the below-described group (A).

Group (A): -OH, $-NH_2$, -Cl, -CN, -COOH, and an epoxy group

Group (B): an ether bond, an acetal bond, $-NH-CH_2-C(OH)-$, -O-M-O- (wherein, M represents Ti or Zr), -NH-M-O- (wherein, M represents Ti or Zr), a urethane bond, $-CH_2-CH(OH)-$, and an amide bond

-Hydrophilic Compound-

Examples of the hydrophilic compound include hydrophilic polymers. A hydrophilic polymer functions as a binder and, when used as an acidic gas separation layer, it retains moisture and allows the carrier to exhibit a function of separating a gas such as carbon dioxide. From the standpoints of being able to dissolve in water to form a coating liquid as well as imparting the facilitated transport membrane with high hydrophilicity (moisture retainability), the hydrophilic compound preferably has high hydrophilicity such that it absorbs physiological saline solution in an amount of not less than 0.5 g/g, more preferably not less than 1 g/g, still more preferably not less than 5 g/g, particularly preferably not less than 10 g/g, most preferably not less than 20 g/g.

The weight-average molecular weight of the hydrophilic compound is appropriately selected to be in a range where the hydrophilic compound can form a stable membrane, and it is preferably from 20,000 to 2,000,000, more preferably from 25,000 to 2,000,000, particularly preferably from 30,000 to 2,000,000. When the weight-average molecular weight is less than the lower limit value, sufficient membrane strength may not be obtained.

Particularly, when the hydrophilic compound has -OH as a cross-linkable group, the hydrophilic compound preferably has a weight-average molecular weight of, for example, not less than 30,000. The weight-average molecular weight is more preferably not less than 40,000, still more preferably not less than 50,000. When the hydrophilic compound has -OH as a cross-linkable group, the upper limit of the weight-average molecular weight is not particularly restricted; however, from the standpoint of the production suitability, it is preferably 6,000,000 or less.

Further, when the hydrophilic compound has $-NH_2$ as a cross-linkable group, the hydrophilic compound preferably has a weight-average molecular weight of not less than 10,000, more preferably not less than 15,000, still more preferably not less than 20,000. The upper limit of the weight-average molecular weight is not particularly restricted; however, from the standpoint of the production suitability, it is preferably 1,000,000 or less.

For example, when PVA is used as the hydrophilic compound, a value measured in accordance with JIS K 6726 is adopted as the weight-average molecular weight of the hydrophilic compound. Further, when a commercially available hydrophilic compound is used, the nominal molecular weight shown in its catalog, specification or the like is adopted.

As the cross-linkable group, one capable of forming a hydrolysis-resistant cross-linked structure is selected, and examples thereof include a hydroxyl group (-OH), an amino group ($-NH_2$), a carboxyl group (-COOH), an epoxy group, a chloride atom (-Cl) and a cyano group (-CN). Thereamong, an amino group and a hydroxy group are preferred

and, from the standpoints of the affinity with the carrier and the carrier-supporting effect, a hydroxy group is most preferred.

Examples of preferred hydrophilic compound having such a single cross-linkable group include polyallylamine, polyacrylic acid, polyvinyl alcohol, polyvinylpyrrolidone, polyacrylamide, polyethylene imine, polyvinyl amine, polyornithine, polylysine, polyethylene oxide, aqueous cellulose, starch, alginic acid, chitin, polysulfonic acid, polyhydroxy methacrylate and poly-N-vinylacetamide, among which polyvinyl alcohol is most preferred. In addition, examples of such hydrophilic compound also include copolymers of these compounds.

Examples of a hydrophilic compound having plural cross-linkable groups include copolymers of polyvinyl alcohol and polyacrylate. A copolymer of polyvinyl alcohol and polyacrylic acid is preferred because it not only has high water-absorbing capacity, but also shows high hydrogel strength even when it absorbed a large amount of water. The content of polyacrylate in the polyvinyl alcohol-polyacrylic acid copolymer is, for example, from 1 to 95% by mol, preferably from 2 to 70% by mol, more preferably from 3 to 60% by mol, particularly preferably from 5 to 50% by mol. Here, the polyacrylic acid may also form a salt, and examples thereof include alkali metal salts such as sodium salt and potassium salt; ammonium salts; and organic ammonium salts.

Polyvinyl alcohol is commercially available, and examples thereof include PVA117 (manufactured by KURARAY Co., Ltd.), POVAL (manufactured by KURARAY Co., Ltd.), POLYVINYL ALCOHOL (manufactured by Aldrich) and J-POVAL (manufactured by Japan VAM & POVAL Co., Ltd.). There are various molecular weight grades; however, as already described, it is preferred to select a polyvinyl alcohol having a weight-average molecular weight of 130,000 to 300,000.

Copolymers of polyvinyl alcohol and polyacrylate (sodium salts) are also commercially available, and examples thereof include KURASTOMER AP20 (trade name, manufactured by KURARAY Co., Ltd.).

It is noted here that these hydrophilic compounds may be used in a mixture of two or more thereof.

The content of the hydrophilic compound(s) is variable depending on the kind(s) thereof; however, from the standpoints of allowing the hydrophilic compound(s) to form a film as a binder(s) and enabling the resulting hydrophilic compound layer to sufficiently retain water, the content of the hydrophilic compound(s) is preferably from 0.5 to 50% by mass, more preferably from 0.75 to 30% by mass, particularly preferably from 1 to 15% by mass.

-Cross-linking Agent-

The above-described cross-linked structure can be formed by a conventionally known technique, such as thermal crosslinking, UV crosslinking, electron-beam crosslinking, radiation crosslinking or photo-crosslinking. The cross-linked structure is preferably formed by photo-crosslinking or thermal crosslinking, most preferably by thermal crosslinking.

For the formation of a hydrophilic compound layer in this embodiment, it is preferred to use a composition containing a cross-linking agent along with a hydrophilic compound. A hydrophilic compound layer-forming coating liquid composition to be used for the formation of a hydrophilic compound layer may be hereinafter simply referred to as "coating liquid composition" or "composition".

As the cross-linking agent, one which reacts with the above-described hydrophilic compound having a single or plural cross-linkable group(s) and contains two or more thermally crosslinkable or photo-crosslinkable functional groups is selected, and the resulting cross-linked structure is required to be a hydrolysis-resistant cross-linked structure selected from the above-described group (B). From this standpoint, examples of a cross-linking agent that can be used in this embodiment include epoxy cross-linking agents, polyvalent glycidyl ethers, polyhydric alcohols, polyvalent isocyanates, polyvalent aziridines, haloepoxy compounds, polyvalent aldehydes, polyvalent amines, and organometallic cross-linking agents. The cross-linking agent is preferably a polyvalent aldehyde, an organometallic cross-linking agent or an epoxy cross-linking agent, more preferably an organometallic cross-linking agent or an epoxy cross-linking agent, most preferably a polyvalent aldehyde having two or more aldehyde groups, such as glutaraldehyde or formaldehyde.

As the epoxy cross-linking agent, a compound having two or more epoxy groups is used, and a compound having four or more epoxy groups is also preferred. Such epoxy cross-linking agents are commercially available, and examples thereof include EPOLITE 100MF (trimethylolpropane triglycidyl ether) manufactured by Kyoeisha Chemical Co., Ltd.; EX-411, EX-313, EX-614B, EX-810, EX-811, EX-821 and EX-830, all of which are manufactured by Nagase ChemteX Corporation; and EPIOL E400 manufactured by NOF Corporation.

Further, as a compound analogous to the epoxy cross-linking agent, an oxetane compound having a cyclic ether can also be preferably used. As the oxetane compound, a polyvalent glycidyl ether having two or more functional groups is preferred and, examples of commercial products thereof include EX-411, EX-313, EX-614B, EX-810, EX-811, EX-821 and EX-830, all of which are manufactured by Nagase ChemteX Corporation.

Other cross-linking agents that may be used for the formation of a cross-linked structure in this embodiment will now be described.

Examples of the polyvalent glycidyl ethers include ethylene glycol diglycidyl ether, polyethylene glycol diglycidyl ether, glycerol polyglycidyl ether, diglycerol polyglycidyl ether, polyglycerol polyglycidyl ether, sorbitol polyglycidyl ether,

pentaerythritol polyglycidyl ether, propylene glycol glycidyl ether, and polypropylene glycol diglycidyl ether.

Examples of the polyhydric alcohols include ethylene glycol, diethylene glycol, triethylene glycol, tetraethylene glycol, polyethylene glycol, glycerin, polyglycerin, propylene glycol, diethanolamine, triethanolamine, polyoxypropyl, oxyethylene-oxypropylene block copolymers, pentaerythritol, and sorbitol.

Examples of the polyvalent isocyanates include 2,4-toluylene diisocyanate and hexamethylene diisocyanate. Further, examples of the polyvalent aziridines include 2,2-bishydroxymethylbutanol-tris[3-(1-aziridinyl) propionate], 1,6-hexamethylene diethylene urea, and diphenylmethane-bis-4,4'-N,N'-diethylene urea.

Examples of the haloepoxy compounds include epichlorohydrin and $\alpha$-methylchlorohydrin.

Examples of the polyvalent aldehydes include glutaraldehyde and glyoxal.

Examples of the polyvalent amines include ethylene diamine, diethylene triamine, triethylene tetramine, tetraethylene pentamine, pentaethylene hexamine, and polyethylene imine.

Examples of the organometallic cross-linking agents include organotitanium cross-linking agents and organic zirconia cross-linking agents.

For example, in cases where a high-molecular-weight polyvinyl alcohol having a weight-average molecular weight of 130,000 or greater is used as the hydrophilic compound, among the above-described cross-linking agents, epoxy compounds and glutaraldehyde are particularly preferred because they exhibit favorable reactivity with this hydrophilic compound and are capable of forming a cross-linked structure having excellent hydrolysis resistance.

Further, for example, in cases where a polyallylamine having a weight-average molecular weight of 10,000 or greater is used, epoxy compounds, glutaraldehyde and organometallic cross-linking agents are particularly preferred because they exhibit favorable reactivity with this hydrophilic compound and are capable of forming a cross-linked structure having excellent hydrolysis resistance.

In cases where a polyethylene imine or a polyallylamine is used as the hydrophilic compound, the cross-linking agent is particularly preferably an epoxy compound.

In cases where the coating liquid composition contains a cross-linking agent, the content thereof is preferably from 0.001 parts by mass to 80 parts by mass, more preferably from 0.01 parts by mass to 60 parts by mass, most preferably from 0.1 parts by mass to 50 parts by mass, with respect to 100 parts by mass of the cross-linkable group(s) contained in the hydrophilic compound. When the content is in this range, the coating liquid composition shows favorable cross-linked structure-forming property and the resulting gel membrane has excellent shape retainability.

Focusing on the cross-linkable group(s) of the hydrophilic compound, the cross-linked structure is preferably one formed by allowing 0.001 mol to 80 mol of a cross-linking agent to react with 100 mol of the cross-linkable group(s) of the hydrophilic compound.

-Carrier-

The carrier is a water-soluble compound which has affinity with an acidic gas (such as carbon dioxide gas) and shows basicity. In the present embodiment, the carrier includes, for example, at least one selected from the group consisting of alkali metal compounds, nitrogen-containing compounds and sulfur oxide.

The term "carrier" used herein refers to a compound which indirectly reacts with an acidic gas, or a compound which itself directly reacts with an acidic gas.

Examples of the former compound include those which react with other gas contained in the feed gas to show basicity, the resulting basic compound of which reacts with an acidic gas. More specifically, the former compound refers to, for example, an alkali metal compound which is capable of selectively uptaking $CO_2$ into a membrane thereof by reacting with steam to release $OH^-$ and allowing the $OH^-$ to react with $CO_2$.

The latter compound is a compound which itself is basic, such as a nitrogen-containing compound or sulfur oxide.

Examples of the alkali metal compounds include at least one selected from the group consisting of alkali metal carbonates, alkali metal bicarbonates and alkali metal hydroxides. Here, as an alkali metal, an alkali metal element selected from cesium, rubidium, potassium, lithium or sodium is preferably used.

In the present specification, the term "alkali metal compound" is used with a meaning that includes the alkali metal itself as well as a salt and ion thereof.

Examples of the alkali metal carbonates include lithium carbonate, sodium carbonate, potassium carbonate, rubidium carbonate, and cesium carbonate.

Examples of the alkali metal bicarbonates include lithium bicarbonate, sodium bicarbonate, potassium bicarbonate, rubidium bicarbonate, and cesium bicarbonate.

Examples of the alkali metal hydroxides include lithium hydroxide, sodium hydroxide, potassium hydroxide, rubidium hydroxide, and cesium hydroxide.

Thereamong, alkali metal carbonates are preferred and, from the standpoint of having favorable affinity with an acidic gas, those compounds which contain potassium, rubidium or cesium that shows high solubility to water as an alkali metal element are preferred.

In this embodiment, since the facilitated transport membrane 32A having hygroscopicity is used as a carbon dioxide gas separation membrane, the facilitated transport membrane 32A becomes gelatinous due to the moisture absorbed during the production, and this is likely to cause a phenomenon that the facilitated transport membrane 32A adheres to other membrane or member during the production (blocking). When the blocking occurs, the facilitated transport membrane 32A causes a defect due to its adhesion during the facilitated transport membrane 32A is peeled and, as a result, gas leakage may occur. Therefore, in this embodiment, it is preferred to inhibit the occurrence of blocking.

Therefore, in this embodiment, the carrier contains two or more alkali metal compounds is preferred. This is because, by using two or more kinds of carriers and separating the same kind of carriers in distance within the membrane, unevenness is generated in blocking and blocking can be thereby inhibited.

The carrier contains a deliquescent first alkali metal compound and a second alkali metal compound that is less deliquescent and has a lower specific gravity than the first alkali metal compound is more preferred. A specific example of the first alkali metal compound is cesium carbonate and that of the second alkali metal compound is potassium carbonate.

By using the carrier containing the first and second alkali metal compounds, the second alkali metal compound having a low specific gravity is arranged on the surface side of the facilitated transport membrane 32A (that is, unevenly arranged on the surface side of the facilitated transport membrane 32A (on the feed gas flow path member 30 side)) and the first alkali metal compound having a high specific gravity is arranged on the inner side of the facilitated transport membrane 32A (that is, unevenly arranged on the porous support 32B side of the facilitated transport membrane 32A). Since the second alkali metal compound arranged on the membrane surface side is less deliquescent than the first alkali metal compound, as compared to a case where the first alkali metal compound is arranged on the membrane surface side, the membrane surface is less sticky and blocking can thus be inhibited. Further, since the highly deliquescent first alkali metal compound is arranged on the membrane inner side, as compared to a case where the second alkali metal compound is simply distributed throughout the membrane, not only blocking can be inhibited but also the carbon dioxide gas separation efficiency can be improved.

Specifically, as shown in FIG. 8, in cases where two or more alkali metal compounds (the first and the second alkali metal compounds) are employed as carriers in the acidic gas separation layer 32, the facilitated transport membrane 32A is composed of a second layer 32A-2, which is arranged on the surface side that is the other side of the porous support 32B (on the feed gas flow path member 30 side), and a first layer 32A-1, which is arranged thereunder on the porous support 32B side. Further, in the facilitated transport membrane 32A constituted by a hydrophilic compound (hydrophilic polymer) as a whole, the second layer 32A-2 mainly contains the second alkali metal compound having a low deliquescence and a low specific gravity. In the first layer 32A-1, the first alkali metal compound that is deliquescent mainly exists. Here, the thickness of the second layer 32A-2 is not particularly restricted; however, in order to allow the second layer 32A-2 to exhibit sufficient deliquescence-suppressing function, the thickness is preferably from 0.01 to 150 $\mu$m, more preferably from 0.1 to 100 $\mu$m.

In the state shown in the drawing, the facilitated transport membrane 32A is shown to be in a form in which the second layer 32A-2 containing the second alkali metal compound is arranged on the surface side (on the feed gas flow path member 30 side) and the first layer 32A-1 containing the first alkali metal compound is spread thereunder; however, the form of the facilitated transport membrane 32A is not restricted thereto. For example, the interface between the two layers does not have to be clear and the layers may be partitioned in a gradiently changing state. Also, the interface between the two layers does not have to be uniform and may be in a tortuous state.

By the action of the second layer 32A-2 that contains the second alkali metal compound having a low deliquescence and a low specific gravity, the deliquescence of the membrane is suppressed. It is understood that such uneven distribution of the second alkali metal compound is attributed to a difference in the specific gravity between the two or more alkali metals. That is, by using an alkali metal having a low specific gravity as one of the two or more alkali metals, the alkali metal having a low specific gravity can be localized in the upper part (surface side) of the coating liquid at the time of forming the membrane. In addition, while allowing the deliquescent first alkali metal compound contained in the first layer 32A-1 arranged on the membrane inner side to maintain its high transportation capacity of carbon dioxide and the like, occurrence of dew condensation and the like can be inhibited on the surface of the second layer 32A-2 by the properties of the second alkali metal compound such as susceptibility to crystallization. By this, not only blocking can be inhibited, but also the carbon dioxide gas separation efficiency can be improved.

Since the second alkali metal compound may exist only in the membrane surface side for inhibition of blocking, it is preferred that the second alkali metal compound is contained in a smaller amount than that of the first alkali metal compound. By this, the amount of the highly deliquescent first alkali metal compound becomes relatively large in the entire membrane, so that the carbon dioxide gas separation efficiency can be further improved.

It is noted here that the number of the two or more alkali metal compounds is determined by the kinds of the alkali metals and that, even if an alkali metal compound has a different counter ion, it is not counted as one alkali metal compound. That is, even when potassium carbonate and potassium hydroxide are used in combination, these compounds are counted as one alkali metal compound.

As a combination of two or more alkali metal compounds, the below-described combinations are preferred. In the table below, alkali metal compounds are indicated by the names of the respective alkali metals; however, it is meant that the alkali metals may each be a salt or ion thereof.

| Combination | Second alkali metal compound | First alkali metal compound |
|---|---|---|
| #1 | potassium | cesium |
| #2 | potassium | rubidium |
| #3 | potassium | cesium/rubidium |

The total content of the carrier(s) in the hydrophilic compound layer is variable depending on the kind(s) thereof; however, in order to inhibit salting-out before coating and to ensure the acidic gas separation function to be exerted, the total content of the carrier(s) is preferably from 0.3% by mass to 30% by mass, more preferably from 0.5 to 25% by mass, particularly preferably from 1 to 20% by mass.

In cases where two or more alkali metal compounds are employed as carriers, showing the total content thereof in terms of the relation with the total solid mass of the hydrophilic compound that is a main component of the membrane, the two or more alkali metal compounds and the like, the total mass ratio of the two or more alkali metal compounds is preferably from 25% by mass to 85% by mass, more preferably from 30% by mass to 80% by mass. By controlling the total mass ratio within this range, the gas separation function can be sufficiently exerted.

Of the two or more alkali metal compounds, with regard to the second alkali metal compound that is less deliquescent and has a lower specific gravity than the first alkali metal compound (the alkali metal compound that is unevenly distributed at the surface side of the facilitated transport membrane 32A (the feed gas flow path member 30 side)), the content thereof is preferably not less than 0.01% by mass, more preferably not less than 0.02% by mass, with respect to the total solid mass of the hydrophilic compound, the two or more alkali metal compounds and the like (typically, the total mass of the separation layer after drying). The upper limit of the content is not particularly restricted, and it is preferably not greater than 10% by mass, more preferably not greater than 7.5% by mass. The blocking-inhibiting capacity is improved by controlling the content to be not less than 0.01% by mass, while the ease of handling can be improved by controlling the content to be not greater than 10% by mass.

The ratio of the first and the second alkali metal compounds is not particularly restricted; however, with respect to 100 parts by mass of the second alkali metal compound, the content of the first alkali metal compound is preferably not less than 50 parts by mass, more preferably not less than 100 parts by mass. The upper limit of the content is preferably 100,000 parts by mass or less, more preferably 80,000 parts by mass or less. By controlling the ratio of the two alkali metal compounds within this range, the blocking property and the ease of handling can both be attained at high levels.

Examples of nitrogen-containing compound that can be used include amino acids such as glycine, alanine, serine, proline, histidine, taurine and diaminopropionic acid; heterocompounds such as pyridine, histidine, piperazine, imidazole and triazine; alkanolamines such as monoethanolamine, diethanolamine, triethanolamine, monopropanolamine, dipropanolamine and tripropanolamine; cyclic polyether amines such as cryptand[2.1] and cryptand[2.2]; bicyclic polyether amines such as cryptand[2.2.1] and cryptand[2.2.2]; porphyrin; phthalocyanine; and ethylenediamine tetraacetic acid.

Examples of sulfur compound that can be used include amino acids such as cystine and cysteine; polythiophenes; and dodecylthiol.

-Other Components-

In the composition used for the formation of the facilitated transport membrane 32A, in addition to the hydrophilic compound(s), the cross-linking agent(s) and the carbon dioxide carrier(s), a variety of additives may be used in combination with the above described components. In addition, as a solvent, water dried to a small amount during the production may also be incorporated.

-Antioxidant-

The above-described coating liquid composition may also contain an antioxidant as long as it does not impair the effects of this embodiment. The addition of an antioxidant has an advantage in that it further improves the heat/moisture resistance.

The antioxidant may be a commercially available one, and examples of suitable antioxidant include dibutylhydroxytoluene (BHT), IRGANOX 1010, IRGANOX 1035FF and IRGANOX 565.

-Specific Compound and Polymer Particle-

The composition of the facilitated transport membrane 32A may also contain, as an additive(s), one or more selected from the group consisting of (1) compounds that contain an alkyl group having from 3 to 20 carbon atoms or a fluoroalkyl group having from 3 to 20 carbon atoms as a hydrophobic moiety and a hydrophilic group as a hydrophilic moiety; (2) compounds having a siloxane structure; and (3) polymer particles having an average diameter of 0.01 μm to 1,000 μm and a specific gravity of 0.5 g/cm$^3$ to 1.3 g/cm$^3$.

In cases where the facilitated transport membrane 32A containing one or more of these components is formed, the specific compound(s) and/or polymer particles should not be allowed to simply exist in the facilitated transport membrane 32A in this embodiment. Rather, in this embodiment, these components are unevenly distributed in the vicinity of the membrane surface as if they each form a membrane at a glance. In this case, the components are unevenly distributed such that carbon dioxide can permeate therethrough. By constituting the facilitated transport membrane 32A in this manner, while maintaining favorable acidic gas separation properties, the occurrence of blocking in continuous membrane formation can be effectively inhibited. This, in turn, enables to inhibit the occurrence of membrane detachment and the productivity can be thereby improved. This is particularly effective especially in roll-to-roll continuous membrane formation.

(Specific Compound)

The facilitated transport membrane 32A contains, along with or without the below-described polymer particle, one or more compounds (specific compounds) selected from the group consisting of: compounds that contain an alkyl group having from 3 to 20 carbon atoms or a fluoroalkyl group having from 3 to 20 carbon atoms and a hydrophilic group; and compounds having a siloxane structure.

The content of the specific compound(s) is preferably from 0.0001 to 1% by mass, more preferably from 0.0003 to 0.8% by mass, still more preferably from 0.001 to 0.1% by mass, with respect to the total mass of the composition for the facilitated transport membrane 32A. When the content of the specific compound(s) is 0.0001% by mass or more, superior effect of inhibiting the occurrence of blocking is obtained. Meanwhile, when the content of the specific compound(s) is 1% by mass or less, the property of separating an acidic gas such as carbon dioxide is favorably maintained.

When coated to form a membrane, a compound that contains a hydrophilic group and an alkyl group having from 3 to 20 carbon atoms or a fluoroalkyl group having from 3 to 20 carbon atoms is likely to be unevenly distributed on the membrane surface in such a manner to cover the membrane surface and thus has an effect of inhibiting the occurrence of blocking. Specifically, in the step of forming a facilitated transport membrane 32A containing a surfactant having an alkyl group or a fluoroalkyl group, the surfactant allows such compound to be oriented on the membrane surface, which is attributed to the highly hydrophobic alkyl group or fluoroalkyl group, and reduces the surface energy of the membrane, thereby effectively inhibiting the occurrence of blocking. Therefore, the compound contains a more hydrophilic alkyl group or fluoroalkyl group, that is, an alkyl group or fluoroalkyl group having a longer carbon chain is preferred.

As this compound, one having a hydrophobic moiety and a hydrophilic moiety, which hydrophobic moiety is an alkyl group having from 3 to 20 carbon atoms or a fluoroalkyl group having from 3 to 20 carbon atoms, may be used. Specific examples of such compound include surfactants containing an alkyl group having from 3 to 20 carbon atoms or a fluoroalkyl group having from 3 to 20 carbon atoms as a hydrophobic moiety.

Examples of the alkyl group having from 3 to 20 carbon atoms include groups such as propyl, butyl, pentyl, hexyl, octyl, decyl, dodecyl and eicosyl. Thereamong, long-chain alkyl groups are preferred because a compound having a long-chain alkyl group is likely to be unevenly distributed on the membrane surface. Specifically, alkyl groups having from 5 to 20 carbon atoms are more preferred, and alkyl groups having from 6 to 20 carbon atoms are still more preferred. Thereamong, a compound having hexyl, octyl, decyl, dodecyl or eicosyl as the alkyl group is particularly preferred.

Examples of the fluoroalkyl group having from 3 to 20 carbon atoms include groups such as fluoropropyl, perfluorobutyl, perfluorohexyl, perfluorooctyl and perfluorodecyl. Thereamong, fluoroalkyl groups having a long carbon chain are preferred because a compound having such a fluoroalkyl group is likely to be unevenly distributed on the membrane surface. Specifically, fluoroalkyl groups having from 4 to 20 carbon atoms are preferred, fluoroalkyl groups having from 5 to 20 carbon atoms are more preferred, and fluoroalkyl groups having from 6 to 20 carbon atoms are still more preferred. Thereamong, a compound having perfluorohexyl, perfluorooctyl or perfluorodecyl as the fluoroalkyl group is particularly preferred.

Among the above-described alkyl groups and fluoroalkyl groups, from the standpoint of achieving both inhibition of blocking and excellent acidic gas separation properties at high levels, alkyl groups having no fluorine atom are more preferred than fluoroalkyl groups.

Examples of the hydrophilic group include a hydroxyl group, a carboxylic acid group, a sulfonate group, a phosphate group, an alkyleneoxy group, an amino group, and a quaternary amino group.

Examples of the surfactants containing an alkyl group having from 3 to 20 carbon atoms or a fluoroalkyl group having from 3 to 20 carbon atoms include the following compounds.

[Surfactants]

-1. Anionic Surfactants-

(Carboxylic Acid-type)

- Sodium octanoate ($C_7H_{15}COONa$)
- Sodium decanoate -($C_9H_{19}COONa$)
- Sodium laurate ($C_{11}H_{23}COONa$)
- Sodium myristate ($C_{23}H_{27}COONa$)
- Sodium palmitate ($C_{15}H_{31}COONa$)
- Sodium stearate ($C_{17}H_{35}COONa$, w: Sodium stearate)
- PFOA($C_7F_{15}COOH$)
- Perfluorononanoic acid ($C_8F_{17}OOH$, w: Perfluorononanoic acid)
- Sodium N-lauroyl sarcosinate ($C_{11}H_{23}CON(CH_3)CH_2COONa$, w: Sodium N-lauroyl sarcosinate)
- Sodium cocoyl glutamate ($HOOCCH_2CH_2CH(NHCOR)COONa$ [R: an alkyl having from 11 to 17 carbon atoms])
- Alpha-sulfo fatty acid methyl ester ($CH_3(CH_2)_nCH(SO_3Na)COOCH_3$ [n = 1 to 19])

(Sulfonic Acid-type)

- Sodium 1-hexane sulfonate ($C_6H_{13}SO_3Na$)
- Sodium 1-octane sulfonate ($C_8H_{17}SO_3Na$)
- Sodium 1-decane sulfonate ($C_{10}H_{21}SO_3Na$)
- Sodium 1-dodecane sulfonate ($C_{12}H_{25}SO_3Na$)
- Perfluorobutane sulfonic acid ($C_4F_9SO_3H$, w: Perfluorobutane sulfonic acid)
- Sodium linear alkylbenzene sulfonate ($RC_6H_4SO_3Na$ [R: an alkyl having from 3 to 20 carbon atoms])
- Sodium toluene sulfonate ($CH_3C_6H_4SO_3Na$)
- Sodium cumene sulfonate ($C_3H_7C_6H_4SO_3Na$)
- Sodium octylbenzene sulfonate ($C_8H_{17}C_6H_4SO_3Na$)
- Sodium dodecylbenzene sulfonate (DBS; $C_{12}H_{25}C_6H_4SO_3Na$)
- Sodium naphthalene sulfonate ($C_{10}H_7SO_3Na$)
- Disodium naphthalene disulfonate ($C_{10}H_6(SO_3Na)_2$)
- Trisodium naphthalene trisulfonate ($C_{10}H_5(SO_3Na)_3$)
- Sodium butylnaphthalene sulfonate ($C_4H_9C_{10}H_6SO_3Na$)
- Sodium di(2-ethylhexyl)sulfosuccinate (compound shown below; RAPISOL A-90, manufactured by NOF Corporation)

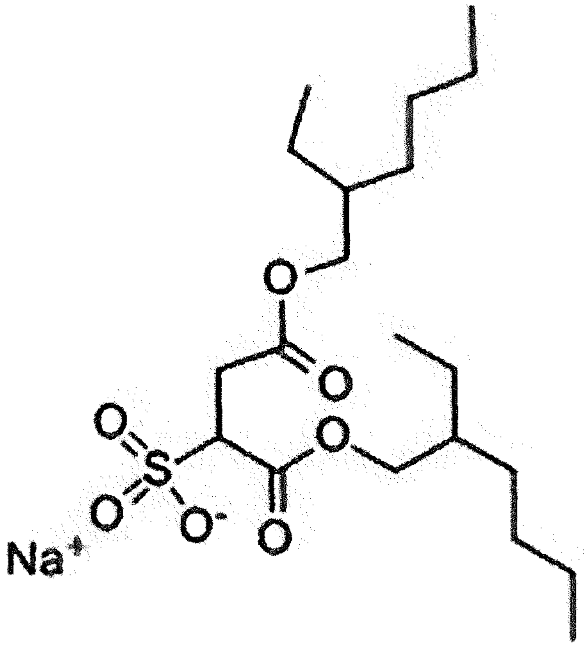

RAPISOL A-90

(Sulfate-type)

- Sodium lauryl sulfate ($C_{12}H_{25}OSO_3Na$)
- Sodium myristyl sulfate ($C_{14}H_{29}OSO_3Na$)
- Sodium laureth sulfate ($C_{12}H_{25}(CH_2CH_2O)_nOSO_3Na$, w: Sodium laureth sulfate)
- Sodium polyoxyethylene alkylphenol sulfonate ($C_8H_{17}C_6H_4O[CH_2CH_2O]_3SO_3Na$)
- Ammonium lauryl sulfate ($C_{12}H_{25}OSO_3NH_4$, w: Ammonium lauryl sulfate)

(Phosphate-type)

- Lauryl phosphate ($C_{12}H_{25}OPO(OH)_2$)
- Sodium lauryl phosphate ($C_{12}H_{25}OPOOHONa$)
- Sodium lauryl phosphate ($C_{12}H_{25}OPOOHOK$)

-2. Cationic Surfactants-

(Quaternary Ammonium Salt-type)

- Dodecyldimethylbenzylammonium chloride ($C_{12}H_{25}N^+(CH_3)_2CH_2C_6H_5Cl$)
- Octyltrimethylammonium chloride ($C_8H_{17}N^+(CH_3)_3Cl$)
- Decyltrimethylammonium chloride ($C_{10}H_{21}N^+(CH_3)_3Cl$)
- Dodecyltrimethylammonium chloride ($C_{12}H_{25}N^+(CH_3)_3Cl$)
- Tetradecyltrimethylammonium chloride ($C_{14}H_{29}N^+(CH_3)_3Cl$)
- Cetyltrimethylammonium chloride (CTAC) ($C_{16}H_{33}N^+(CH_3)_3Cl$)
- Stearyltrimethylammonium chloride ($C_{18}H_{37}N^+(CH_3)_3Cl$)
- Hexadecyltrimethylammonium bromide (CTAB)($C_{16}H_{33}N^+(CH_3)_3Br$)
- Benzyltrimethylammonium chloride ($C_6H_5CH_2N^+(CH_3)_3Cl$)
- Benzyltriethylammonium chloride ($C_6H_5CH_2N^+(C_2H_5)_3Cl$)
- Benzalkonium chloride ($C_6H_5CH_2N^+(CH_3)_2RCl$ [R: an alkyl having from 8 to 17 carbon atoms])
- Benzalkonium bromide ($C_6H_5CH_2N^+(CH_3)_2RBr$ [R: an alkyl having from 8 to 17 carbon atoms])

- Benzethonium chloride ($C_6H_5CH_2N^+(CH_3)_2(CH_2CH_2O)_2C_6H_4C_8H_{17}Cl$)
- Dialkyldimethylammonium chloride ($RN^+R(CH_3)_2Cl$ [R: an alkyl having from 3 to 20 carbon atoms])
- Didecyldimethylammonium chloride ($C_{10}H_2,N^+C_{10}H_{21}(CH_3)_2Cl$)
- Distearyldimethylammonium chloride ($C_{18}H_{37}N^+C_{18}H_{37}(CH_3)_2Cl$, w: Dimethyldioctadecylammonium chloride)

(Alkylamine Salt-type)

- Monomethylamine hydrochloride ($CH_3NH_2 \cdot HCl$)
- Dimethylamine hydrochloride ($(CH_3)_2NH \cdot HCl$)
- Trimethylamine hydrochloride ($(CH_3)_3N \cdot HCl$)

(Pyridine Ring-Containing Substances)

- Butylpyridinium chloride ($C_5H_5N^+C_4H_9Cl$)
- Dodecylpyridinium chloride ($C_5H_5N^+C_{12}H_{25}Cl$)
- Cetylpyridinium chloride ($C_5H_5N^+C_{16}H_{33}Cl$)

-3. Nonionic Surfactants-

(Ester-type)

- Glyceryl laurate ($C_{11}H_{23}COOCH_2CH(OH)CH_2OH$, w: Glyceryl laurate)
- Glyceryl monostearate ($C_{17}H_{35}COOCH_2CH(OH)CH_2OH$)
- Sorbitan fatty acid ester ($RCOOCH_2CH(CHOH)_3CH_2O$ [R: an alkyl having from 3 to 20 carbon atoms])
- Sucrose fatty acid ester ($RCOOC_{12}H_{21}O_{10}$ [R: an alkyl having from 3 to 20 carbon atoms])

(Ether-type)

- Polyoxyethylene alkyl ether ($RO(CH_2CH_2O)_nH$ [R: an alkyl having from 3 to 20 carbon atoms])
- Pentaethylene glycol monododecyl ether ($C_{12}H_{25}O(CH_2CH_2O)_5H$, w: Pentaethylene glycol monododecyl ether)
- Octaethylene glycol monododecyl ether ($C_{12}H_{25}O(CH_2CH_2O)_8H$, w: Octaethylene glycol monododecyl ether)
- Polyoxyethylene alkylphenyl ether ($RC_6H_4O(CH_2CH_2O)_nH$ [R: an alkyl having from 3 to 20 carbon atoms])
- Nonoxynols ($C_9H_{19}C_6H_4O(CH_2CH_2O)nH$, w: Nonoxynols)
- Nonoxynol-9 ($C_9H_{19}C_6H_4O(CH_2CH_2O)_9H$, w: Nonoxynol-9)
- Polyoxyethylene polyoxypropylene glycol ($H(OCH_2CH_2)_1(OC_3H_6)_m(OCH_2CH_2)_nOH$)

(Ester Ether-type)

- Polyoxyethylene sorbitan fatty acid ester
- Polyoxyethylene hexitan fatty acid ester
- Polyethylene glycol sorbitan fatty acid ester

(Alkanolamide-type)

- Lauric acid diethanolamide ($C_{11}H_{23}CON(C_2H_4OH)_2$)
- Oleic acid diethanolamide ($C_{17}H_{33}CON(C_2H_4OH)_2$)

- Stearic acid diethanolamide ($C_{17}H_{35}CON(C_2H_4OH)_2$)
- Cocamide DEA ($CH_3(CH_2)_nCON(C_2H_4OH)_2$)

(Alkyl glucoside)

- Octyl glucoside ($C_8H_{17}C_6H_{11}O_6$)
- Decyl glucoside ($C_{10}H_{21}C_6H_{11}O_6$, w: Decyl glucoside)
- Lauryl glucoside ($C_{12}H_{25}C_6H_{11}O_6$, w: Lauryl glucoside)

(Higher alcohols)

- Cetanol ($C_{16}H_{33}OH$, w: Cetyl alcohol)
- Stearyl alcohol ($C_{18}H_{37}OH$, w: Stearyl alcohol)
- Oleyl alcohol ($CH_3(CH_2)_7CH=CH(CH_2)_8OH$, w: Oleyl alcohol)

-4. Amphoteric Surfactants-

(Alkylbetaine-type)

- Lauryl dimethyl aminoacetic acid betaine ($C_{12}H_{25}N^+(CH_3)_2CH_2COO^-$)
- Stearyl dimethyl aminoacetic acid betaine ($C_{18}H_{37}N^+(CH_3)_2CH_2COO^-$)
- Dodecyl aminomethyl dimethyl sulfopropyl betaine ($C_{12}H_{25}N^+(CH_3)_2(CH_2)_3SO_3^-$)
- Octadecyl aminomethyl dimethyl sulfopropyl betaine ($C_{18}H_{37}N^+(CH_3)_2(CH_2)_3SO_3^-$)

(Fatty Acid Amide Propyl Betaine-type)

- Cocamidopropyl betaine ($C_{11}H_{23}CONH(CH_2)_3N^+(CH_3)_2CH_2COO^-$, w: Cocamidopropyl betaine)
- Cocamidopropyl hydroxysultaine ($C_{11}H_{23}CONH(CH_2)_3N^+(CH_3)_2CH_2CHOHCH_2SO_3^-$) (Alkylimidazole-type)
- 2-alkyl-N-carboxymethyl-N-hydroxyethylimidazolinium betaine ($RC_3H_4N_2(C_2H_4OH)CH_2COO^-$[R: an alkyl having from 3 to 20 carbon atoms])

(Amino Acid-type)

- Sodium lauroyl glutamate ($C_{11}H_{23}CON(C_2H_4COOH)HCHCOONa$)
- Potassium lauroyl glutamate ($C_{11}H_{23}CON(C_2H_4COOH)HCHCOOK$)
- Lauroyl methyl-β-alanine ($C_{11}H_{23}CONH(C_2H_4COOCH_3)$)

(Amine Oxide-type)

- Lauryldimethylamine-N-oxide ($C_{12}H_{25}N^+(CH_3)_2O^-$)
- Oleyldimethylamine-N-oxide ($C_{18}H_{37}N^+(CH_3)_2O^-$)

The molecular weight of the surfactant containing an alkyl group having from 3 to 20 carbon atoms or a fluoroalkyl group having from 3 to 20 carbon atoms is in the range of preferably from 60 to 2,000, more preferably from 80 to 1,500. When the molecular weight is 60 or greater, there is an advantage in that the membrane surface can inhibit blocking uniformly. Meanwhile, when the molecular weight is 2,000 or less, while inhibiting blocking, acid gas separation properties

can be secured.

In cases where a facilitated transport membrane 32A that contains such "surfactant containing an alkyl group having from 3 to 20 carbon atoms or a fluoroalkyl group having from 3 to 20 carbon atoms" is formed, the content of the surfactant is preferably from 0.01% by mass to 10% by mass, more preferably from 0.01 to 3% by mass, with respect to the total solid content of the facilitated transport membrane 32A. When the content of the "surfactant containing an alkyl group having from 3 to 20 carbon atoms or a fluoroalkyl group having from 3 to 20 carbon atoms" is 0.01% by mass or greater, superior effect of inhibiting the occurrence of blocking is obtained. Meanwhile, when the content of the surfactant is 10% by mass or less, the property of separating an acidic gas such as carbon dioxide is favorably maintained.

[Compound Having Siloxane Structure]

When coated to form the facilitated transport membrane 32A, a compound having a siloxane structure is likely to be unevenly distributed on the membrane surface in such a manner to cover the membrane surface and thus has an effect of inhibiting the occurrence of blocking. The siloxane structure is not particularly restricted as long as it has a siloxane skeleton represented by "-Si-O-Si-" as a partial structure.

As the compound having a siloxane structure, from the standpoint of improving the surface segregation at the time forming the facilitated transport membrane 32A by coating, a compound containing a structural unit having a siloxane structure in a side chain is preferred.

A siloxane compound useful for introducing a siloxane structure into a molecule is available as a commercial product on the market, and examples thereof include one-terminal-reactive silicones, such as X-22-173DX and X-22-173BX manufactured by Shin-Etsu Chemical Co., Ltd.

Further, such a compound can be synthesized by allowing a siloxane having a reactive terminal to react with a compound having a cation-polymerizable group. For example, such a compound can be synthesized from a compound having a hydroxyl group on one terminal, such as SILAPLANE Series FM-0411, FM-0421 or FM-0425 manufactured by JNC Corporation, and epichlorohydrin, or by the method described in JP-A No. H11-80315.

In cases where a facilitated transport membrane 32A that contains a compound having a siloxane structure is formed, the content of the compound having a siloxane structure is preferably from 0.01% by mass to 10% by mass, more preferably from 0.01 to 3% by mass, with respect to the total solid content of the facilitated transport membrane 32A. When the content of the compound having a siloxane structure is 0.01% by mass or greater, superior effect of inhibiting the occurrence of blocking is obtained. Meanwhile, when the content of this specific compound is 10% by mass or less, the property of separating an acidic gas such as carbon dioxide is favorably maintained.

(Polymer Particle)

Examples of suitable polymer particle include particles of polyolefins (e.g., polyethylene, polypropylene and polymethylpentene), polymethyl methacrylates, polystyrenes, thermoplastic elastomers and silicones. Thereamong, polyolefin particles are preferred because they can uniformly inhibit blocking.

The average particle diameter of the polymer particles is in the range of from 0.01 μm to 1,000 μm. When the diameter of the polymer particles is 0.01 μm or larger, the particles are not packed excessively and, when a coated membrane is formed, the area occupied by the particles relative to the surface of the membrane can be maintained without impairing the separation performance. Meanwhile, when the average particle diameter of the polymer particles is 1,000 μm or smaller, when a coated membrane is formed, since the amount of the polymer existing on the surface of the membrane is not excessive, a reduction in the carbon dioxide permeability is inhibited and the polymer particles are not likely to fall off. Especially, the average particle diameter of the polymer particles is in the range of preferably from 0.02 μm to 750 μm, more preferably from 0.03 μm to 500 μm, particularly preferably from 0.1 μm to 50 μm.

The diameter of the polymer particles refers to a value measured using FPAR1000 manufactured by Otsuka Electronics Co., Ltd.

The specific gravity of the polymer particles is in the range of from 0.5 $g/cm^3$ to 1.3 $g/cm^3$. When the specific gravity of the polymer particles is 0.5 $g/cm^3$ or higher, clogging of the membrane surface is not likely to occur and the carbon dioxide permeability is thus not likely to be impaired. Meanwhile, when the specific gravity of the polymer particles is 1.3 $g/cm^3$ or lower, sedimentation of the polymer particles is not likely to occur in the coating liquie and, when a coated membrane is formed, the polymer is likely to exist on the surface of the membrane; therefore, the blocking-inhibiting effect is not likely to be deteriorated. Especially, the specific gravity of the polymer particles is in the range of preferably from 0.52 $g/cm^3$ to 1.28 $g/cm^3$, more preferably from 0.55 $g/cm^3$ to 1.27 $g/cm^3$.

The polymer particles can be used in the form of, for example, an emulsion in which the polymer in a liquid state is dispersed in an aqueous medium, or a dispersion (suspension) in which the polymer in a solid state is dispersed in an aqueous medium.

As the polymer particles, a commercial product available on the market may be employed, and examples

thereof include CHEMIPEARL w-308, w-400, w-100, wp-100 and A-100, all of which are manufactured by Mitsui Chemicals, Inc.

In cases where the facilitated transport membrane 32A contains polymer particles, the total amount of polymer particles in the facilitated transport membrane 32A is preferably one at which the area occupied by the polymer particles on the surface of the facilitated transport membrane 32A is from 0.1 % to 60%. When the area occupied by the polymer particles is 0.1% or larger, superior effect of inhibiting the occurrence of blocking is obtained. Meanwhile, when the area occupied by the polymer particles is 60% or smaller, favorable acidic gas separation properties can be maintained while inhibiting the occurrence of blocking. The area occupied by the polymer particles is more preferably from 0.5% to 30%, still more preferably from 1% to 10%.

The occupied area can be determined by image analysis of the particle coverage per unit area using a scanning electron microscope (JSM6610, manufactured by JEOL Ltd.).

In cases where polymer particles are used in the coating and formation of the facilitated transport membrane 32A, since the polymer particles have a low specific gravity, in the process of forming and drying the facilitated transport membrane 32A using a coating liquid containing the polymer particles, the polymer particles are unevenly distributed at the resulting membrane. By this, even without performing such a special treatment of providing the polymer particles only on the surface, the polymer particles are unevenly distributed on the surface to inhibit blocking.

Further, by preparing a first coating liquid that contains polymer particles and the above-described specific compound and a second coating liquid that does not contain any polymer particle or the specific compound and then coating the second coating liquid and the first coating liquid in layers in the order mentioned on the porous support 32B, the facilitated transport membrane 32A can be formed as a layer in which the polymer particles and the specific compound are unevenly distributed on the surface.

None of the specific compound and the polymer particles is miscible with other components constituting the hydrophilic compound layer; therefore, the intrinsic separation capacity of the hydrophilic compound layer is not impaired.

Examples of the above-mentioned other components include a catalyst, a moisture-absorbing (water-absorbing) agent, a co-solvent, a membrane strength-adjusting agent, and a defect detecting agent.

(Porous Support)

The porous support 32B, which constitutes the acidic gas separation layer 32 along with the facilitated transport membrane 32A, has heat resistance in the same manner as the facilitated transport membrane 32A.

As the material/form of the porous support 32B, a woven fabric, a nonwoven fabric, a porous membrane or the like can be adopted, and the same material/form as that of the feed gas flow path member 30 may be used as well.

As the material of the porous support 32B, generally, a porous support having a high self-supporting property and a high porosity can be suitably used. Membrane filters of polysulfone or cellulose, interfacially polymerized thin membranes of polyamide or polyimide, and stretched porous membranes of polytetrafluoroethylene or high-molecular-weight polyethylene have a high porosity and exhibit limited inhibition of diffusion of a separated gas such as carbon dioxide and are, therefore, preferred from the standpoints of strength, production suitability and the like. Thereamong, a stretched membrane of polytetrafluoroethylene (PTFE) is particularly preferred.

These porous supports can be used solely; however, a composite membrane which is integrated with a reinforcement porous support can also be used suitably.

As the porous support 32B, in addition to the above-described organic materials, an inorganic material or an organic-inorganic hybrid material may be used as well. Examples of an inorganic porous support include porous substrates containing a ceramic as a main component. By containing a ceramic as a main component, the porous substrates show excellent heat resistance, corrosion resistance and the like and can have an improved mechanical strength. The kind of the ceramic is not particularly restricted, and any of the conventionally used ceramics can be employed. Examples of such ceramics include alumina, silica, silica-alumina, mullite, cordierite, and zirconia. Further, the porous support 32B may also be prepared by compositing two or more ceramics, or a ceramic and a metal, or by compositing a ceramic and an organic compound.

When the porous support 32B is excessively thick, the gas permeability is reduced, while when it is excessively thin, there is a problem in the strength. Therefore, the thickness of the support is preferably from 30 μm to 500 μm, more preferably from 50 μm to 450 μm, still more preferably from 50 μm to 400 μm, particularly preferably from 50 μm to 300 μm.

Further, from the standpoints of allowing an adhesive to sufficiently impregnate into the region to be coated with the adhesive and preventing the gas permeating region from interfering with gas permeation, the pores of the porous support 32B have an average diameter of preferably from 0.001 μm to 10 μm, more preferably from 0.002 μm to 5 μm, particularly preferably from 0.005 μm to 1 μm.

Here, in cases where a continuous process utilizing a sheet of the porous support 32B is employed in the below-described method of producing the acidic gas separation layer 32, in order to prevent the occurrence of distortion or fracture of the porous support 32B in the roll-to-roll production, for example, the porous support 32B preferably has a

strength of not less than 10N/10 mm (tensile rate: 10 mm/min).

(Method of Producing Acidic Gas Separation Layer)

A method of producing the acidic gas separation layer 32 (hereinafter, simply referred to as "the production method of the acidic gas separation layer 32") will now be described.

The production method of the acidic gas separation layer 32 is, for example, a method of forming the facilitated transport membrane 32A by coating a coating liquid containing a hydrophilic compound and an alkali metal compound (facilitated transport membrane-forming composition) on the porous support 32B. In the formation of the facilitated transport membrane 32A, it is preferred that a coating liquid (dope) to be formed the facilitated transport membrane 32B is coated on the porous support 32B (the term "coating" used herein means to include a mode in which the coating liquid is deposited on the surface by immersion) and then cured by an arbitrary method.

It is noted here that the expression "on the porous support 32B" means that other layer may be interposed between the porous support 32B and the facilitated transport membrane 32A. Further, unless otherwise specified, the expressions "on" and "under" refer to the direction in which a gas to be separated is fed (toward the feed gas flow path member 30 side) and the direction in which a separated gas is discharged (toward the permeated gas flow path member 36 side), respectively.

The coating liquid used for forming the facilitated transport membrane 32A (facilitated transport membrane-forming composition) is prepared by adding a hydrophilic compound (hydrophilic polymer), a carrier (alkali metal compound) and, if necessary, other components, each in an appropriate amount to water (normal-temperature water or heated water); sufficiently stirring the resulting mixture; and, if necessary, heating the mixture with stirring to facilitate dissolution. After adding and dissolving the hydrophilic compound into water, by slowly adding the carrier (alkali metal compound) thereto and stirring the resulting mixture, precipitation (salting-out) of the hydrophilic compound can be effectively prevented.

A solvent used in the coating liquid (facilitated transport membrane-forming composition) is not particularly restricted, and examples thereof include aqueous media (water, and aqueous solutions in which a water-soluble component is dissolved), among which water is preferred. It is noted here, however, that the water may contain, for example, a component that inevitably dissolves in water. Examples of the water-soluble component include alcohols.

A preferred example of the apparatus used in the production method of the acidic gas separation layer 32 includes: a delivery roll which sends off a belt-form sheet of the porous support 32B (hereinafter, referred to as "porous support sheet); a coater which coats the composition on the porous support sheet; a drying section where the resulting gel membrane is dried; and a take-up roll which rolls up the thus formed acidic gas separation layer sheet. In addition, transfer rolls for transferring the work-in-progress sheet are arranged in each part. By using an apparatus having such a constitution, a membrane can be formed in a roll-to-roll mode and, by further performing a cross-linking step, a sheet of the acidic gas separation layer 32 having excellent gas separation properties can be continuously and efficiently produced.

The details of the production method of the acidic gas separation layer 32 will now be described by steps.

-Coating Step-

In the production method of the acidic gas separation layer 32, first, a facilitated transport membrane-forming composition (coating liquid) is prepared. Then, a belt-form porous support sheet is delivered from the delivery roll and transferred to the coating section (coater) to coat the composition (coating liquid) on a porous support, thereby forming a coated membrane.

In cases where an inorganic material is used as the material of the porous support sheet, instead of the continuous steps exemplified above, application and drying of the coating liquid may be performed by separate transfers. Such processing by separate transfers may be performed by a conventional method, and the coating, drying, heating and the like can be performed in the same manner as described in this embodiment.

The transfer rate of the porous support sheet varies depending on the type of the porous support sheet, the viscosity of the coating liquid, and the like; however, when the transfer rate of the porous support sheet is excessively high, the thickness uniformity of the coated membrane in the coating step may be reduced, while when the transfer rate is excessively slow, the productivity is reduced. The transfer rate of the porous support sheet can be determined in accordance with the type of the porous support sheet, the viscosity of the coating liquid and the like along with consideration of the above points, and it is preferably not slower than 0.5 m/min, more preferably from 0.75 to 200 m/min, particularly preferably from 1 to 200 m/min.

As a method of coating the coating liquid, a conventionally known method can be employed. Examples thereof include methods using a curtain-flow coater, an extrusion die coater, an air doctor coater, a blade coater, a rod coater, a knife coater, a squeeze coater, a reverse roll coater, a bar coater or the like. Particularly, from the standpoints of the

uniformity of the membrane thickness, the coating amount and the like, it is preferred to use a blade coater or an extrusion die coater.

The amount of the coating liquid to be coated varies depending on the composition, concentration and the like of the coating liquid; however, when the coating amount per unit area is excessively small, pores may be formed on the resulting membrane in the drying step and its strength may be insufficient as the facilitated transport membrane 32A. Meanwhile, when the coating liquid is coated in an excessively large amount, the variation in the membrane thickness may be increased and the resulting facilitated transport membrane 32A may become excessively thick, so that the permeability of a separated gas may be reduced. From these standpoints, the thickness of the gel membrane (facilitated transport membrane 32A) is not less than 1 μm, more preferably not less than 5 μm, particularly preferably not less than 10 μm. From the standpoint of preventing a reduction in the permeability of a separated gas, the thickness of the gel membrane (facilitated transport membrane 32A) is preferably 1,000 μm or less.

Since, in this manner, a gel membrane sheet can be obtained after forming a coated membrane by coating the coating liquid on a porous support sheet, the membrane thickness can be precisely controlled. Therefore, an acidic gas separation layer sheet having a large and uniform thickness can be formed. By cutting this acidic gas separation layer sheet at a prescribed length and, if necessary, shaping the thus cut sheet, an acidic gas separation layer having excellent gas separation properties can be produced with high productivity.

-Drying Step-

The gel membrane sheet is subsequently dried to form a dry membrane (facilitated transport membrane 32A). The drying is performed by blowing warm air to the gel membrane sheet transferred to a heating section. The warm air is blown at a velocity at which the gel membrane sheet can be promptly dried and is not broken, for example, at a velocity of preferably from 0.5 to 200 m/min, more preferably from 0.75 to 200 m/min, particularly preferably from 1 to 200 m/min. The temperature of the blown air is preferably from 1 to 120°C, more preferably from 2 to 115°C, particularly preferably from 3 to 110°C, such that deformation or the like of the porous support sheet does not occur and the gel membrane sheet can be promptly dried.

By performing the above-described steps and, if necessary, subsequently shaping the resultant into desired dimensions and shape, the acidic gas separation layer 32 is obtained.

After the formation of the acidic gas separation layer 32, if necessary, in order to prevent elution of the carrier (alkali metal compound), a carrier elution-preventing layer may also be formed on the acidic gas separation layer 32 (on the facilitated transport membrane 32A thereof). It is preferred that the carrier elution-preventing layer has a property of allowing gases such as water vapor to permeate therethrough but not water and the like, and the carrier elution-preventing layer is preferably a hydrophobic porous film. A film having such a property may be coated on the membrane surface, or a film prepared separately may be layered on the membrane surface.

(Permeated Gas Flow Path Member)

The permeated gas flow path member 36 constituting the layered body 14 together with the acidic gas separation layer 32 is a member through which the acidic gas 22, which has reacted with the carrier and permeated through the acidic gas separation layer 32, flows toward the through-hole 12As. The permeated gas flow path member 36 functions as a spacer and has a function of allowing the permeated acidic gas 22 to flow toward the inner side thereof. Further, the permeated gas flow path member 36 is preferably a net-form member in the same manner as the feed gas flow path member 30, such that it also has a function of allowing infiltration of the below-described adhesive portions 34 and 40. The material of the permeated gas flow path member 36 may be the same as that of the feed gas flow path member 30. Further, assuming that the material gas 20 containing water vapor at a high temperature flows therethrough, it is preferred that the permeated gas flow path member 36 has heat/moisture resistance in the same manner as the acidic gas separation layer 32.

Specific examples of a material preferably used in the permeated gas flow path member 36 include polyester-based materials such as epoxy-impregnated polyester; polyolefin-based materials such as polypropylene; and fluorine-containing materials such as polytetrafluoroethylene.

The thickness of the permeated gas flow path member 36 is not particularly restricted, and it is preferably from 100 μm to 1,000 μm, more preferably from 150 μm to 950 μm, still more preferably from 200 μm to 900 μm.

Since the permeated gas flow path member 36 serves as a flow path of the acidic gas 22 that has permeated through the acidic gas separation layer 32, the permeated gas flow path member 36 preferably has a low resistance. Specifically, for example, the permeated gas flow path member 36 has a high porosity and shows limited deformation when pressure is applied thereto, as well as limited pressure loss.

The porosity of the permeated gas flow path member 36 is preferably from 30% to 99%, more preferably from 35% to 97.5%, still more preferably from 40% to 95%. Here, the porosity can be measured as follows. First, utilizing an

ultrasonic wave or the like, the voids of the permeated gas flow path member 36 are sufficiently impregnated with water. Then, after removing excess water from the surface, the weight per unit area is measured. A value obtained by subtracting the thus measured weight from the dry weight is the volume of water impregnated into the voids of the permeated gas flow path member 36, and this value is converted with the density of water to determine the void amount, hence, the porosity.

In cases where the impregnation with water is not sufficient, the measurement can also be performed using a solvent having a low surface tension, such as an alcohol-based solvent.

The deformation of the permeated gas flow path member 36 caused by application of pressure thereto can be approximated by the elongation determined by a tensile test and, when a load of 10N/10-mm width is applied, the elongation is preferably 5% or less, more preferably 4% or less.

Further, the pressure loss of the permeated gas flow path member 36 can be approximated to the loss in the flow rate of a compressed air flown at a certain flow rate and, when a compressed air is allowed to flow in the permeated gas flow path member 36 of 15-cm square at room temperature and a rate of 15 L/min, the loss is preferably 7.5 L/min or less, more preferably 7 L/min or less.

(Adhesive Portion)

The adhesive portions 34 and 40 are composed of an adhesive having heat/moisture resistance. In this embodiment, the "heat resistance" in the "heat/moisture resistance" of the adhesive portions 34 and 40 means that, after being cured, these adhesive portions have a glass transition temperature Tg of 40°C or higher, particularly preferably 60°C or higher. Further, in this embodiment, the "moisture resistance" in the "heat/moisture resistance" of the adhesive portions 34 and 40 means that the adhesive force is not reduced by half even after being store for 2 hours under conditions of 80°C and 80% RH. An improvement in the heat/moisture resistance can be realized by increasing the viscosity by, for example, changing the material (main component) of the adhesive portions 34 and 40, or dissolving 1 part by mass to 50 parts by mass of a filler, such as a polystyrene, liquid paraffin or silica, to the main component.

The material of the adhesive portions 34 and 40 is not particularly restricted as long as it has heat/moisture resistance, and examples thereof include epoxy resins, vinyl chloride copolymers, vinyl chloride-vinyl acetate copolymers, vinyl chloride-vinylidene chloride copolymers, vinyl chloride-acrylonitrile copolymers, butadiene-acrylonitrile copolymers, polyamide resins, polyvinyl butyrals, polyesters, cellulose derivatives (such as nitrocellulose), styrene-butadiene copolymers, various synthetic rubber-based resins, phenol resins, urea resins, melamine resins, phenoxy resins, silicon resins and urea formamide resins.

FIG. 3 is a drawing that shows the condition of the acidic gas separation module 10 before the layered body 14 is wound on the permeated gas collection tube 12, as well as one embodiment of the regions where the adhesive portions 34 and 40 are formed.

As shown in FIG. 3, the adhesive portion 40 adheres the acidic gas separation layer 32 with the permeated gas flow path member 36 in a state where the through-hole 12As are covered with the permeated gas flow path member 36 and the layered body 14 is wound on the permeated gas collection tube 12 in the direction of the arrow R shown in the drawing. Meanwhile, the adhesive portion 34 adheres the acidic gas separation layer 32 with the permeated gas flow path member 36 before the layered body 14 is wound on the permeated gas collection tube 12.

The adhesive portions 34 and 40 include: circumferential direction adhesive portions 34A and 40A, respectively, which adhere the edges on both sides of the acidic gas separation layer 32 and the permeated gas flow path member 36 along the circumferential direction of the permeated gas collection tube 12; and axial direction adhesive portions 34B and 40B, respectively, which adhere the circumferential direction edges of the acidic gas separation layer 32 and the permeated gas flow path member 36.

The circumferential direction adhesive portion 34A and the axial direction adhesive portion 34B are connected with each other, and the adhesive portion 34 as a whole is in an envelope form where a circumferential direction edge between the acidic gas separation layer 32 and the permeated gas flow path member 36 is open at the winding starting site. In addition, between the circumferential direction adhesive portion 34A and the axial direction adhesive portion 34B, there is formed a flow path P1 in which the acidic gas 22 that has permeated through the acidic gas separation layer 32 flows to the through-hole 12As.

In the similar manner, the circumferential direction adhesive portion 40A and the axial direction adhesive portion 40B are connected with each other, and the adhesive portion 40 as a whole is in a so-called "envelope form" where a circumferential direction edge between the acidic gas separation layer 32 and the permeated gas flow path member 36 is open at the winding starting site. In addition, between the circumferential direction adhesive portion 40A and the axial direction adhesive portion 40B, there is formed a flow path P2 in which the acidic gas 22 that has permeated through the acidic gas separation layer 32 flows to the through-hole 12As.

In this embodiment, since the facilitated transport membrane 32A is used as an acidic gas separation membrane, water contained in the membrane effuses into the porous support 32B to improve the wetting property of the porous

support 32B and the surface tension thereof draws in the adhesive, thereby making it easy for the adhesive of the adhesive portions 34 and 40 to infiltrate into the pores of the porous support 32B via the permeated gas flow path member 36. Therefore, even without forming the circumferential direction adhesive portions 34A and 40A by an injection-sealing method as in Patent Document 1, the adhesive portions 34 and 40 are provided with strong adhesive force by a conventional coating method and, as a result, gas leakage can be inhibited.

<Method of Producing Acidic Gas Separation Module>

A method of producing the acidic gas separation module 10 having the above-described constitution will now be described.

FIGs. 4A to 4C are drawings that show the production steps of the acidic gas separation module 10.

In the method of producing the acidic gas separation module 10 according to this embodiment, first, as shown in FIG. 4A, using a fixing member 50 such as a KAPTON tape or an adhesive, the tip of the oblong permeated gas flow path member 36 is fixed onto the wall (peripheral surface) of the permeated gas collection tube 12.

Here, it is preferred that a slit (not shown) is formed on the wall of the tube along the axial direction. In this case, the tip of the permeated gas flow path member 36 is inserted into the slit such that it is fixed on the inner surface of the permeated gas collection tube 12 with the fixing member 50. By this constitution, even if the layered body 14 containing the permeated gas flow path member 36 is wound on the permeated gas collection tube 12 with tension, because of the friction between the inner surface of the permeated gas collection tube 12 and the permeated gas flow path member 36, the permeated gas flow path member 36 does not slip out of the slit, that is, the fixation of the permeated gas flow path member 36 is maintained.

Next, as shown in FIG. 4B, the oblong feed gas flow path member 30 is sandwiched by the oblong acidic gas separation layer 32 folded in half with the facilitated transport membrane 32A facing inside. Here, when folding the facilitated transport membrane 32A, it may be folded in two exact halves, or may be folded unevenly.

Next, on one of the outer surfaces of the folded facilitated transport membrane 32A (surface of the porous support 32B), an adhesive 52 is coated on both transversal edges and one of the longitudinal edges of the membrane (coated in an envelope form). By this, the adhesive portion 34, that is, the circumferential direction adhesive portion 34A and the axial direction adhesive portion 34B, are formed. Further, in the adhesive used for forming the adhesive portion 34, in order to improve its coating property, various solvents and surfactants can be incorporated.

In order to inhibit gas leakage, it is preferred that not less than 10%, particularly 30% of the pores of the porous support 32B are filled with the adhesive portion 34. As a means of filling the pores in this manner, for example, the one described in JP-A No. H3-68428 can be employed.

Then, as shown in FIG. 4C, on the surface of the permeated gas flow path member 36 fixed on the permeated gas collection tube 12, the acidic gas separation layer 32 sandwiching the feed gas flow path member 30 is pasted via the adhesive portion 34. Here, the acidic gas separation layer 32 is pasted such that the axial direction adhesive portion 34B is arranged away from the permeated gas collection tube 12. By this, the adhesive portion 34 as a whole is in a form where a circumferential direction edge between the acidic gas separation layer 32 and the permeated gas flow path member 36 is open at the winding starting site, and the flow path P1, in which the acidic gas 22 that has permeated through the acidic gas separation layer 32 flows to the through-hole 12As, is formed between the circumferential direction adhesive portion 34A and the axial direction adhesive portion 34B.

Subsequently, on the surface of the acidic gas separation layer 32 pasted on the permeated gas flow path member 36 (the opposite surface of the pasted surface), an adhesive 54 is coated on both transversal edges and one of the longitudinal edges of the membrane. By this, the adhesive portion 40, that is, the circumferential direction adhesive portion 40A and the axial direction adhesive portion 40B, as well as the layered body 14 are formed.

Thereafter, the layered body 14 is wound in layers on the permeated gas collection tube 12 in the direction of the arrow R shown in the drawing such that the through-hole 12As are covered with the permeated gas flow path member 36. In this process, it is preferred that the layered body 14 is wound with application of tension. By this, the adhesives 52 and 54 of the adhesive portions 34 and 40, particularly the adhesive 54 of the adhesive portion 40 is allowed to easily infiltrate into the pores of the porous support 32B and gas leakage can be thereby inhibited. Further, for the application of tension, as described above, it is preferred that the tip of the permeated gas flow path member 36 is inserted into the slit to be fixed such that the fixation of the permeated gas flow path member 36 is not loosened.

By performing the above-described steps, the acidic gas separation module 10 shown in FIG. 1 is obtained.

<Modification Examples>

Thus far, a specific embodiment of the present invention has been described in detail; however, the invention is not restricted thereto by any means. It is obvious to those of ordinary skill in the art that other various embodiments are possible within the scope of the invention and, for example, the above-described embodiment may be combined

with any of the below-described modification examples as appropriate, or the above-described embodiment may be replaced with any of the below-described modification examples.

For example, in the above-described embodiment, a case where the acidic gas separation module 10 is constituted such that the acidic gas-containing material gas 20 fed from the side of one end 10A thereof to the layered body 14 is separated into the acidic gas 22 and the residual gas 24, which are then separately discharged to the side of the other end 10B, was explained. However, the acidic gas separation module 10 may also be constituted such that the acidic gas-containing material gas 20 is fed from the side of the end 10B to the layered body 14 and separated into the acidic gas 22 and the residual gas 24, which are then separately discharged to the side of the end 10B.

Further, in the above-described embodiment, a cases where the feed gas flow path member 30 is sandwiched by the acidic gas separation layer 32 folded in half was explained; however, the acidic gas separation layer 32 and the feed gas flow path member 30 may be simply layered. In this case, the layered body 14 is constituted by layering, for example, the permeated gas flow path member 36, the adhesive portion 34, the acidic gas separation layer 32, the feed gas flow path member 30 and the adhesive portion 40 (such as a double-sided tape) in the order mentioned from the permeated gas collection tube 12 side.

In order to improve the strength of the acidic gas separation module 10 and to immobilize the anti-telescoping plate 18, the acidic gas separation module 10 may be reinforced with an FRP (fiber-reinforced plastic). The types of the fiber and matrix resin used in the FRP are not restricted and, examples of the fiber include glass fibers, carbon fibers, KEVLAR fibers and DYNEEMA fibers, among which glass fibers are particularly preferred. Further, examples of the matrix resin include epoxy resins, polyamide resins, acrylate resins and unsaturated polyester resins and, from the standpoints of the heat resistance and the hydrolysis resistance, an epoxy resin is preferred.

The container in which the acidic gas separation module 10 is stored is not particularly restricted; however, the separation efficiency is further improved by using a container in which two or more inlets of the material gas 20 are diagonally arranged, or a manifold is arranged such that the gas is uniformly brought into contact with the edge surface of the acidic gas separation module.

Further, in order to adjust the amount and the rate of the gas flow entering each acidic gas separation module 10 and to thereby control the pressure loss, plural acidic gas separation module 10s may be arranged in parallel in the container. Alternatively, plural acidic gas separation module 10s may be connected in series in the container.

In the above-described embodiment, a case where the permeated gas collection tube 12 is closed at one end was explained; however, this end may be open and a sweep gas selected from inert gases and the like may be fed from the opening.

In this case, it is preferred to use such an acidic gas separation module 100 as shown in FIG. 5 in place of the acidic gas separation module 10. FIG. 5 is a drawing that shows a modification example of the acidic gas separation module 10 shown in FIG. 3.

As shown in FIG. 5, the acidic gas separation module 100 is constituted by, in the same manner as the acidic gas separation module 10, winding the layered body 14 in layers on the permeated gas collection tube 12. However, in the acidic gas separation module 100, the permeated gas collection tube 12 has an outlet 26 arranged at one end thereof, from which the acidic gas 22 collected from the through-hole 12As is discharged; and an inlet 60 arranged at the other end, through which the sweep gas is fed. In addition, the permeated gas collection tube 12 also has a blocking member 62 which is arranged in the center of the tube and provides blockage inside the tube. It is noted here that, the position of the permeated gas collection tube 12 is not restricted to the center of the tube, and it may be arranged at any position between the outlet 26 and the inlet 60.

Further, in the acidic gas separation module 100, between the circumferential direction adhesive portion 34As and on the peripheral side of the blocking member 62, a partition adhesive portion 64 is formed in the circumferential direction (which is the lengthwise direction of the layered body 14 prior to winding). The partition adhesive portion 64 is not in contact with the axial direction adhesive portion 34B, whereby forming a flow path P3, in which the sweep gas flows, between the circumferential direction adhesive portion 34A and the axial direction adhesive portion 34B.

In the similar manner, in the acidic gas separation module 100, between the circumferential direction adhesive portion 40As and on the peripheral side of the blocking member 62, a partition adhesive portion 66 is formed in the circumferential direction (which is the lengthwise direction of the layered body 14 prior to winding). This partition adhesive portion 66 is not in contact with the axial direction adhesive portion 40B, whereby forming a flow path P4, in which the sweep gas flows, between the circumferential direction adhesive portion 40A and the axial direction adhesive portion 40B.

Since the flow paths P3 and P4 through which the sweep gas flows are formed in this manner, the acidic gas does not stay between the adhesive portions 34 and 40 and flows toward the through-hole 12As, so that gas leakage is thereby inhibited and a high acidic gas separation efficiency is attained.

Since the partition adhesive portions 64 and 66 are arranged only for the purpose of forming the flow paths P3 and P4, their widths are preferably narrower than those of the circumferential direction adhesive portions 34A and 40A, respectively. This is because the presence of the partition adhesive portions 64 and 66 makes it difficult for the acidic gas to permeate from the acidic gas separation layer 32 and it is thus preferred that their widths are small as much as

possible.

Further, the position of the blocking member 62 shown in FIG. 5 is not restricted to the center of the tube, and it may be arranged on either side of the tube. In this case, the positions of the partition adhesive portions 64 and 66 are also adjusted in accordance with the position of the blocking member 62. Further, the number of the blocking member 62 is not restricted to one, and plural blocking member 62s may be arranged as well.

Moreover, as shown in FIG. 6, in order to reduce the pressure loss, the blocking member 62 may be formed obliquely with respect to the flow of the sweep gas.

The number and the shape of the partition adhesive portion 66 are not particularly restricted and, as shown in FIG. 7, the partition adhesive portion 66 may have a substantially L-shaped outer partition adhesive portion 66A and a substantially L-shaped inner partition adhesive portion 66B. The number and the shape of the partition adhesive portion 64 are also not restricted.

(Acidic Gas Separation System)

The acidic gas separation system of the present invention contains the acidic gas separation module 10 of the invention. In cases where the acidic gas separation system of the invention contains plural acidic gas separation module 10s, the plural acidic gas separation module 10s may be arranged in parallel or connected in series. Alternatively, the acidic gas separation system of the invention may contain units that are connected in parallel, each of which units is composed of plural acidic gas separation module 10s connected in series.

Further, the acidic gas separation system of the invention may be a system in which the acidic gas separation layer 32 is arranged as a flat membrane or a system in which the acidic gas separation layer 32 processed into a pleat form or the like is arranged.

## EXAMPLES

The present invention will now be described in more detail by way of examples thereof; however, the invention should not at all be restrictively interpreted by the examples.

<Example 1>

In Example 1, after adding 1M hydrochloric acid to an aqueous solution containing 2.4% by weight of KURASTOMER AP-20 (manufactured by KURARAY Co., Ltd.) and 0.01% by weight of a 25% aqueous glutaraldehyde solution (manufactured by Wako Pure Chemical Industries, Ltd.) to a pH of 1 and thereby performing cross-linking, a 40% aqueous cesium carbonate solution (manufactured by Kisan Kinzoku Chemicals Co., Ltd.) was added as a carrier to the resultant to a cesium carbonate concentration of 6.0% by weight. Further, 1% RAPISOL A-90 [manufactured by NOF Corporation; a surfactant having the structure represented by the above-described Formula (1) (sodium di(2-ethylhexyl) sulfosuccinate: molecular weight = 445; specific compound)] was added in an amount of 0.003% by weight. Then, the resulting mixture was heated and an aqueous agar solution, which had been separately prepared, was added thereto to prepare a coating composition.

Using a PTFE/PP nonwoven fabric (manufactured by GE) as a porous support, the thus obtained coating composition was coated and dried thereon to prepare an acidic gas separation layer composed of a facilitated transport membrane and the porous support.

Next, the thus obtained acidic gas separation layer was folded in half with the facilitated transport membrane being inside. A KAPTON tape was attached to the folded valley portion for reinforcement such that the surface of the valley portion of the membrane was protected from damage caused by the edge of a feed gas flow path member. Then, as the feed gas flow path member, a 0.5 mm-thick polypropylene-made net was sandwiched by the folded acidic gas separation layer. On the porous support side of this unit, an adhesive composed of an epoxy resin having a high viscosity (about 40 Pa·s) (E120HP, manufactured by Henkel Japan Ltd.) was coated in an envelope form (see FIG. 3), and a tricot-knitted permeated gas flow path member made of an epoxy-impregnated polyester was wound in layers on a permeated gas collection tube.

By this process, an acidic gas separation module of Example 1 was prepared. This module had a membrane surface area of 0.025 $m^2$.

Here, in the preparation of the acidic gas separation module of Example 1, the adhesive was coated on the porous support such that 14% of the pores of the porous support were filled with the adhesive (The ratio of the pores of the porous support that were filled with the adhesive is hereinafter referred to as "adhesive impregnation ratio". In cases where two or more porous materials are used as porous supports, the "adhesive impregnation ratio" represents the ratio of the filled pores on the porous support arranged on the membrane side.). It is noted here that the pores of the permeated gas flow path member were completely filled.

The adhesive impregnation ratio was measured as follows.

The prepared module is disassembled and an adhesive-coated portion is cut out. Then, the adhesive-coated portion is freeze-fractured and the resulting cross-section is observed by SEM. From an observed image, the extent of the pores of the porous support filled with adhesive is determined by image analysis.

Thereafter, the area of the pores of the porous support impregnated with the adhesive, (A), and the area of the pores not impregnated with the adhesive, (B), are measured to calculate the "adhesive impregnation ratio" is calculated using the following equation.

$$\text{Equation: Adhesive impregnation ratio} = A \div (A + B) \times 100$$

From the above, the adhesive impregnation ratio becomes 100% when the pores are completely filled with the adhesive.

<Example 2>

An acidic gas separation module of Example 2 was prepared in the similar manner as in Example 1, except that the ratio of the pores of the porous support that were impregnated with the adhesive was changed to 86%. This module had a membrane surface area of 0.025 $m^2$.

<Example 3>

An acidic gas separation module of Example 3 was prepared in the similar manner as in Example 1, except that the permeated gas collection tube was changed to one having a blocking member in the center of the tube; a partition adhesive portion was formed to provide a flow path through which a sweep gas was to flow (see FIG. 5); and the ratio of the pores of the porous support that were impregnated with the adhesive was changed to 91%. This module had a membrane surface area of 0.025 $m^2$.

<Example 4>

After adding 1M hydrochloric acid to an aqueous solution containing 2.4% by weight of KURASTOMER AP-20 (manufactured by KURARAY Co., Ltd.; a polyvinyl alcohol-polyacrylate copolymer (hydrophilic polymer)) and 0.01% by weight of a 25% aqueous glutaraldehyde solution (manufactured by Wako Pure Chemical Industries, Ltd.; cross-linking agent) to a pH of 1 and thereby performing cross-linking, a 40%-by-mass aqueous cesium carbonate solution (manufactured by Kisan Kinzoku Chemicals Co., Ltd.; alkali metal salt) was added to the resultant to a cesium carbonate concentration of 3.66% by mass. Then, a 40%-by-mass aqueous potassium carbonate solution (manufactured by Wako Pure Chemical Industries, Ltd.; alkali metal salt) was added to a potassium carbonate concentration of 0.61% by mass. To the resultant, 1%-by-mass RAPISOL A-90 was further added to a concentration of 0.003% by weight. Thereafter, the resulting mixture was heated and an aqueous agar solution, which had been separately prepared, was added thereto to prepare a coating liquid (acidic gas separation layer-forming coating liquid).

A PTFE/PP nonwoven fabric (manufactured by GE) was prepared as a porous support, and the thus obtained coating liquid was coated and dried thereon to prepare an acidic gas separation layer composed of a facilitated transport membrane and the porous support. The content of the surfactant was 0.05% by mass with respect to the total solid content of the facilitated transport membrane.

Next, using the thus obtained acidic gas separation layer, an acidic gas separation module of Example 4 was prepared in the similar manner as in Example 1, except that the ratio of the pores of the porous support that were impregnated with the adhesive was changed to 92%. The thus obtained module had a membrane surface area of 0.025 $m^2$.

<Example 5>

An acidic gas separation module of Example 5 was prepared in the similar manner as in Example 4, except that the permeated gas flow path member was changed to one made of polypropylene and the ratio of the pores of the porous support that were impregnated with the adhesive was changed to 93%. This module had a membrane surface area of 0.025 $m^2$.

<Example 6>

An acidic gas separation module of Example 6 was prepared in the similar manner as in Example 1, except that the ratio of the pores of the porous support that were impregnated with the adhesive was changed to 9.1%. This module had a membrane surface area of 0.025 $m^2$.

<Comparative Example 1>

An acidic gas separation module of Comparative Example 1 was prepared in the similar manner as in Example 1, except that a dissolution-diffusion membrane composed of triacetyl cellulose was used in place of the facilitated transport membrane and the ratio of the pores of the porous support that were impregnated with the adhesive was changed to 88%. This module had a membrane surface area of 0.025 $m^2$.

<Evaluation of Gas Separation>

For each of the thus obtained acidic gas separation modules of Examples and Comparative Examples, the acid gas separation performance was evaluated under the following Condition 1. In addition, for Examples 3 to 5, the measurement was also performed under the below-described Condition 2.

-Condition 1-

As a test gas, a material gas of $H_2$:$CO_2$:$H_2O$ = 45:5:50 (flow rate: 2.2 L/min) was fed to each acidic gas separation module at a temperature of 130°C and a total pressure of 301.3 kPa, and an Ar gas (flow rate: 0.6 L/min) was allowed to flow in the permeation side. The permeated gas was analyzed by gas chromatography to calculate the $CO_2$ permeation rate (P($CO_2$)) and the $CO_2/H_2$ separation factor ($\alpha$). The calculation results of the P($CO_2$) and $\alpha$ are summarized in Table 1.

-Condition 2-

As a test gas, a material gas of $H_2$:$CO_2$:$H_2O$ = 45:5:50 (flow rate: 2.2 L/min) was fed to each acidic gas separation module at a temperature of 130°C and a total pressure of 301.3 kPa, and a mixed gas of $H_2O$:Ar = 50:50 (flow rate: 0.6 L/min) was allowed to flow in the permeation side. The permeated gas was analyzed by gas chromatography to calculate the $CO_2$ permeation rate (P($CO_2$)) and the $CO_2/H_2$ separation factor ($\alpha$). The calculation results of the P($CO_2$) and $\alpha$ are shown in Table 1.

[Table 1]

| | Condition 1 | | Condition 2 | |
|---|---|---|---|---|
| | P($CO_2$) [mol/$m^2$·s·kPa] | $\alpha$ | P($CO_2$) [mol/$m^2$·s·kPa] | $\alpha$ |
| Example 1 | $1.21 \times 10^{-5}$ | 57 | - | - |
| Example 2 | $1.54 \times 10^{-5}$ | 112 | - | - |
| Example 3 | $1.81 \times 10^{-5}$ | 110 | $2.28 \times 10^{-5}$ | 161 |
| Example 4 | $1.92 \times 10^{-5}$ | 123 | $2.41 \times 10^{-5}$ | 163 |
| Example 5 | $1.94 \times 10^{-5}$ | 131 | $2.45 \times 10^{-5}$ | 172 |
| Example 6 | $2.22 \times 10^{-5}$ | 41 | - | - |
| Comparative Example 1 | $3.47 \times 10^{-3}$ | 1 | $3.4 \times 10^{-3}$ | 1 |

As shown in Table 1 for Condition 1, the acidic gas separation modules of Examples 1 to 6 each have a higher $\alpha$ value than that of Comparative Example 1; therefore, it is seen that, even when separating an acidic gas ($CO_2$) from a high-temperature material gas, these acidic gas separation modules of Examples 1 to 6 show a high acidic gas separation efficiency. It is also seen that, among the acidic gas separation modules of Examples 1 to 6, particularly those of Examples 2 to 5 show a higher separation efficiency.

As shown in Table 1 for Condition 2, the acidic gas separation modules of Examples 3 to 5 each have a higher $\alpha$ value than that of Comparative Example 1; therefore, it is seen that, even when separating an acidic gas from a material gas containing water vapor at a high temperature, these acidic gas separation modules of Examples 3 to 5 show a high

acidic gas separation efficiency.

<Evaluation of Module Defect>

Defect in each of the acidic gas separation modules prepared above was evaluated by filling the feed side with He gas, tightly sealing the module, and then measuring the time required for the pressure to be reduced from 0.34 MPa to 0.3 MPa. The defect evaluation results are shown in Table 2.

[Table 2]

| | Pressure reduction time (s) | Adhesive impregnation ratio (%) |
|---|---|---|
| Example 1 | 3,200 | 14 |
| Example 2 | 26,000 | 86 |
| Example 3 | 32,000 | 91 |
| Example 4 | 33,500 | 92 |
| Example 5 | 33,000 | 93 |
| Example 6 | 2,600 | 9.1 |
| Comparative Example 1 | 600 | 88 |

As shown in Table 2, since the time required for the pressure reduction was longer in Examples 1 to 6 than in Comparative Examples 1, it is seen that the modules of Examples 1 to 6 had less defect than that of Comparative Example 1. Thereamong, the time required for the pressure reduction was longer in Examples 1 to 5 than in Example 6; therefore, it is seen that the modules of Examples 1 to 5 had less defect than that of Example 6. Furthermore, since the time required for the pressure reduction was longer in Examples 3 to 5 than in Examples 1 and 6, it is also seen that the modules of Examples 3 to 5 had less defect than those of Examples 1 and 6.

<Test Examples>

(Preparation of Acidic Gas Separation Layer Samples)

A coating composition was prepared in the similar manner as in Example 1, except that a first alkali metal compound 1 [cesium carbonate (manufactured by Wako Pure Chemical Industries, Ltd.)] and a second alkali metal compound [potassium carbonate (manufactured by Wako Pure Chemical Industries, Ltd.)] were used as carriers of the coating solution composition of Example 1 for the formation of a facilitated transport membrane; and that these alkali metal compounds were added such that the resulting composition had the solid content ratio shown in Table 3. Using a hydrophobic PTFE porous membrane (FLUOROPORE FP010, manufactured by Sumitomo Electric Industries, Ltd.) as a porous support, the thus obtained composition was coated and dried thereon to prepare an acidic gas separation layer sample 101 whose layers each had the thickness shown in Table 3.

Further, acidic gas separation layer samples 102 to 109 and C11 to C 14 were also prepared in the similar manner as the acidic gas separation layer sample 101, except that the conditions were changed as shown in Table 3. It is noted here that, in C14, RAPISOL A-90 was not added.

[Table 3]

| Sample No.*1 | Hydrophilic compound | Thickness*2 | | Second alkali metal compound | | First alkali metal compound | | Solvent | Total alkali metal compounds |
|---|---|---|---|---|---|---|---|---|---|
| | | Second layer (μm) | First layer (μm) | Type | Solid content ratio [% by mass] | Type | Solid content ratio [% by mass] | | Solid content ratio [% by mass] |
| 101 | KURASTOMER AP20 | 10.4 | 20.1 | potassium carbonate | 10.3 | cesium carbonate | 49.0 | water | 59.3 |
| 102 | PVA 117 | 10.3 | 20.6 | potassium carbonate | 10.3 | cesium carbonate | 49.0 | water | 59.3 |
| 103 | KURASTOMER AP20 | 1.2 | 32.4 | potassium carbonate | 0.6 | cesium carbonate | 70.2 | water | 70.8 |
| 104 | KURASTOMER AP20 | 9.4 | 18.4 | potassium carbonate | 13.7 | cesium carbonate | 32.4 | water | 46.1 |
| 105 | KURASTOMER AP20 | 9.9 | 16.6 | potassium carbonate | 14.7 | cesium carbonate | 24.9 | water | 39.6 |
| 106 | KURASTOMER AP20 | 10.0 | 21.1 | potassium carbonate | 13.6 | cesium carbonate | 48.0 | water | 61.6 |
| 107 | KURASTOMER AP20 | 12.8 | 17.8 | potassium carbonate | 15.8 | rubidium carbonate | 47.1 | water | 62.9 |
| 108 | KURASTOMER AP20 | 9.4 | 19.1 | potassium bicarbonate | 6.3 | cesium carbonate | 53.0 | water | 59.3 |
| 109 | KURASTOMER AP20 | 8.9 | 18.8 | potassium hydroxide | 3.0 | cesium carbonate | 56.3 | water | 59.3 |
| C11 | KURASTOMER AP20 | - | - | - | | cesium carbonate | 90.2 | water | 90.2 |
| C12 | KURASTOMER AP20 | - | - | - | | cesium carbonate | 15.6 | water | 15.6 |
| C13 | KURASTOMER AP20 | - | - | - | | cesium carbonate | 60.6 | water | 60.6 |

(continued)

| Sample No.[*1] | Hydrophilic compound | Thickness[*2] | | Second alkali metal compound | | First alkali metal compound | | Solvent | Total alkali metal compounds |
|---|---|---|---|---|---|---|---|---|---|
| | | Second layer (μm) | First layer (μm) | Type | Solid content ratio [% by mass] | Type | Solid content ratio [% by mass] | | Solid content ratio [% by mass] |
| C14 | KURASTOMER AP20 | - | - | - | | cesium carbonate | 61.9 | water | 61.9 |

In Table 3, *1 and *2 are as follows.
*1: The sample numbers starting with "C" denote Reference Examples.
*2: Each thickness was determined by analyzing a cross-sectional SEM image of the subject membrane (average value of 10 points).

-Evaluation of Gas Separation-

For each of the thus obtained acidic gas separation layer samples, the carbon dioxide gas separation performance was evaluated as follows.

The acidic gas separation layer sample was cut out into a circle of 47 mm in diameter with porous support and then sandwiched by a PTFE membrane filter to prepare a permeation test sample. As a test gas, a mixed gas of $H_2$:$CO_2$ = 9:1 (flow rate: 500 mL/min) was fed to each test sample (effective area: 2.40 $cm^2$) at a relative humidity of 70%, a temperature of 130°C and a total pressure of 301.3 kPa, and an Ar gas (flow rate: 90 mL/min) was allowed to flow in the permeation side. The permeated gas was analyzed by gas chromatography to calculate the $CO_2$ permeation rate ($P(CO_2)$) and the $CO_2/H_2$ separation factor ($\alpha$). The calculation results are shown in Table 4.

-Evaluation of Blocking-

The subject coated membrane was wound in 5 layers on a cardboard tube and the resulting cardboard tube was left to stand for one day under conditions of 25°C and 50%RH. Thereafter, the coated membrane was peeled off from the cardboard tube and the presence/absence of detachment of the coated surface was evaluated. The results thereof are shown in Table 4.
A: No detachment was found.
B: No detachment was found; however, partial adhesion was observed when the coated membrane was unwound.
C: Partial detachment occurred.
D: No detachment was found; however, the membrane was cracked.

[Table 4]

| Sample No. | Gas permeation test | | Blocking test |
|---|---|---|---|
| | $P(CO_2)$ [GPU] | $\alpha$ | |
| 101 | 154 | 600 | A |
| 102 | 144 | 569 | A |
| 103 | 172 | 595 | A |
| 104 | 34 | 106 | A |
| 105 | 31 | 134 | A |
| 106 | 142 | 391 | A |
| 107 | 171 | 556 | A |
| 108 | 135 | 457 | A |
| 109 | 88 | 366 | A |
| C11 | 187 | 21 | D |
| C12 | 23 | 74 | B |
| C13 | 166 | 596 | B |
| C14 | 142 | 439 | C |

With regard to Test Examples (samples 101 to 109), it is seen that the $P(CO_2)$ value was not less than 30 GPU and the value of $\alpha$ was not less than 100. Also in the evaluation of blocking, favorable results were obtained and favorable composite membranes showing no detachment were formed. On the other hand, in the facilitated transport membrane of Reference Example (sample C11), the solid content ratio was high and cracking was observed. In addition, in the facilitated transport membrane of Reference Example (sample C12), the cesium concentration of the first layer (cesium layer) was low and the gas permeation/separation performance was thus poor and, in C 13, partial adhesion was observed. Moreover, in C 14, since RAPISOL A-90 was not added, partial detachment was detected.

FIG. 9 shows an electron micrograph and EDX images that were obtained by observation of a cross-section of the acidic gas separation layer sample of Test Example (sample 101). As seen from the observation results, in the facilitated transport membrane, potassium carbonate is unevenly distributed in the surface-side second layer in contrast to cesium carbonate constituting the first layer.

The disclosure of Japanese Patent Application Nos. 2012-139001, 2012-198702 and 2013-067015 are hereby incorporated by reference in its entirety. All the references, patent applications and technical standards that are described in the present specification are hereby incorporated by reference to the same extent as if each individual reference, patent application or technical standard is concretely and individually described to be incorporated by reference. The foregoing descriptions of the embodiments of the present invention are provided for the purposes of illustration and explanation, and they are not intended to be exhaustive or to limit the invention to the precise forms disclosed. Clearly, a number of modifications and variations are obvious to those of ordinary skill in the art. The above embodiments were chosen and described to provide the best illustration of the principles of the invention and its practical applications and to thereby enable those of ordinary skill in the art to understand the invention in various embodiments and with various modifications as are suited to the particular use contemplated. It is intended that the scope of the invention be defined by the following claims and their equivalents.

DESCRIPTION OF SYMBOLS

10, 100: Acidic gas separation module
12: Permeated gas collection tube
12A: Through-hole
14: Layered body
20: Material gas
22: Acidic gas
26: Outlet
30: Feed gas flow path member
32: Acidic gas separation layer
32A: Facilitated transport membrane
32B: Porous support
34B, 40B: Axial direction adhesive portion
34A, 40A: Circumferential direction adhesive portion
34, 40: Adhesive portion
36: Permeated gas flow path member
50: Fixing member
52, 54: Adhesive
60: Inlet
62: Blocking member
64, 66: Partition adhesive portion
P3: Flow path
P4: Flow path

## Claims

**1.** An acidic gas separation module, comprising:

a permeated gas collection tube having through-holes formed at a tube wall thereof;
a layered body in which are layered: a feed gas flow path member through which an acidic gas-containing material gas is fed; an acidic gas separation layer that comprises a carrier that reacts with the acidic gas contained in the material gas passing through the feed gas flow path member, and a hydrophilic compound supporting the carrier; and a permeated gas flow path member through which the acid gas that has reacted with the carrier and permeated through the acidic gas separation layer flows toward the through-holes; and
an adhesive portion which adheres both side edges of the acidic gas separation layer and the permeated gas flow path member along a circumferential direction in a state in which the through-holes are covered with the permeated gas flow path member and the layered body is wound in layers on the permeated gas collection tube, to adhere circumferential direction edges of the acidic gas separation layer and the permeated gas flow path member.

**2.** The acidic gas separation module according to claim 1, wherein the carrier comprises at least one selected from the group consisting of alkali metal compounds, nitrogen compounds and sulfur compounds.

**3.** The acidic gas separation module according to claim 1, wherein the acidic gas separation layer comprises:

a facilitated transport membrane which comprises the hydrophilic compound and the carrier and is arranged at the feed gas flow path member side; and
a porous support which is arranged on the permeated gas flow path member side and supports the facilitated transport membrane, and
wherein the hydrophilic compound has a cross-linked structure.

**4.** The acidic gas separation module according to claim 3, wherein at least 10% of pores of the porous support are filled by the adhesive portion.

**5.** The acidic gas separation module according to claim 1, wherein the acidic gas separation layer comprises at least one selected from:

a compound selected from the group consisting of a compound that comprises a hydrophilic group and an alkyl group having from 3 to 20 carbon atoms or a fluoroalkyl group having from 3 to 20 carbon atoms, and a compound having a siloxane structure; or
polymer particles having an average particle diameter of 0.01 μm to 1,000 μm and a specific gravity of 0.5 $g/cm^3$ to 1.3 $g/cm^3$.

**6.** The acidic gas separation module according to claim 1, wherein the carrier comprises two or more alkali metal compounds.

**7.** The acidic gas separation module according to claim 6, wherein the carrier comprises:

a first alkali metal compound that is deliquescent; and
a second alkali metal compound that is less deliquescent, and has a lower specific gravity, than the first alkali metal compound.

**8.** The acidic gas separation module according to claim 1, wherein:

a slit is formed at the tube wall along the axial direction; and
a tip of the permeated gas flow path member is inserted into and fixed in the slit.

**9.** The acidic gas separation module according to claim 1, wherein:

the permeated gas collection tube comprises an outlet arranged at one end of the tube, from which the acidic gas collected from the through-holes is discharged, an inlet arranged at the other end of the tube, through which a sweep gas is fed, and a blocking member which is arranged between the outlet and the inlet and provides blockage inside the tube;
a partition adhesive portion is formed in the circumferential direction between circumferential direction adhesive portions of the adhesive portion that are adhered along the circumferential direction, and at an outer peripheral side of the blocking member, the partition adhesive portion not being in contact with an axial direction adhesive portion of the adhesive portion that adheres the circumferential direction edges, and having a narrower width than the circumferential direction adhesive portions; and
a flow path through which the sweep gas flows is formed between the circumferential direction adhesive portions and the axial direction adhesive portion.

**10.** A gas separation system, comprising the acidic gas separation module according to claim 1.

**11.** A method of producing an acidic gas separation layer having a facilitated transport membrane on a porous support, the method comprising:

coating a coating liquid that contains a hydrophilic compound and two or more alkali metal compounds onto the porous support to form the facilitated transport membrane.

**12.** The method of producing an acidic gas separation layer according to claim 11, wherein one of the alkali metals of the two or more alkali metal compounds is potassium.

**13.** The method of producing an acidic gas separation layer according to claim 11, wherein the two or more alkali metal compounds include potassium carbonate, potassium bicarbonate or potassium hydroxide.

**14.** The method of producing an acidic gas separation layer according to claim 11, wherein a total mass ratio of the two or more alkali metal compounds is from 25% by mass to 85% by mass with respect to a total mass of the hydrophilic compound and the two or more alkali metal compounds.

**15.** The method of producing an acidic gas separation layer according to claim 11, wherein the hydrophilic compound is a polyvinyl alcohol or a copolymer of polyvinyl alcohol and polyacrylic acid.

**16.** The method of producing an acidic gas separation layer according to claim 11, wherein one of the two or more alkali metal compounds is unevenly distributed at a surface side of the facilitated transport membrane.

**17.** The method of producing an acidic gas separation layer according to claim 16, wherein the alkali metal compound unevenly distributed at the surface side of the facilitated transport membrane is a potassium salt or a potassium ion.

**18.** The method of producing an acidic gas separation layer according to claim 16, wherein the alkali metal compound unevenly distributed at the surface side of the facilitated transport membrane is contained in an amount of from 0.01% by mass to 10% by mass with respect to a total solid content.

**19.** A facilitated transport membrane of an acidic gas separation layer, comprising a hydrophilic compound and two or more alkali metal compounds.

**20.** An acidic gas separation layer, comprising the facilitated transport membrane according to claim 19 on a porous support.

**21.** The acidic gas separation layer according to claim 20, wherein a total mass ratio of the two or more alkali metal compounds is from 25% by mass to 85% by mass with respect to a total mass of the hydrophilic compound and the two or more alkali metal compounds.

**22.** The acidic gas separation layer according to claim 20, wherein one of the two or more alkali metal compounds is unevenly distributed at a surface side of the facilitated transport membrane.

**23.** The acidic gas separation layer according to claim 20, wherein the alkali metal compound unevenly distributed at the surface side of the facilitated transport membrane is contained in an amount of from 0.01% by mass to 10% by mass with respect to a total solid content.

**24.** An acidic gas separation module, comprising the acidic gas separation layer according to claim 20.

**25.** An acidic gas separation system, comprising the acidic gas separation module according to claim 24.

Fig 1

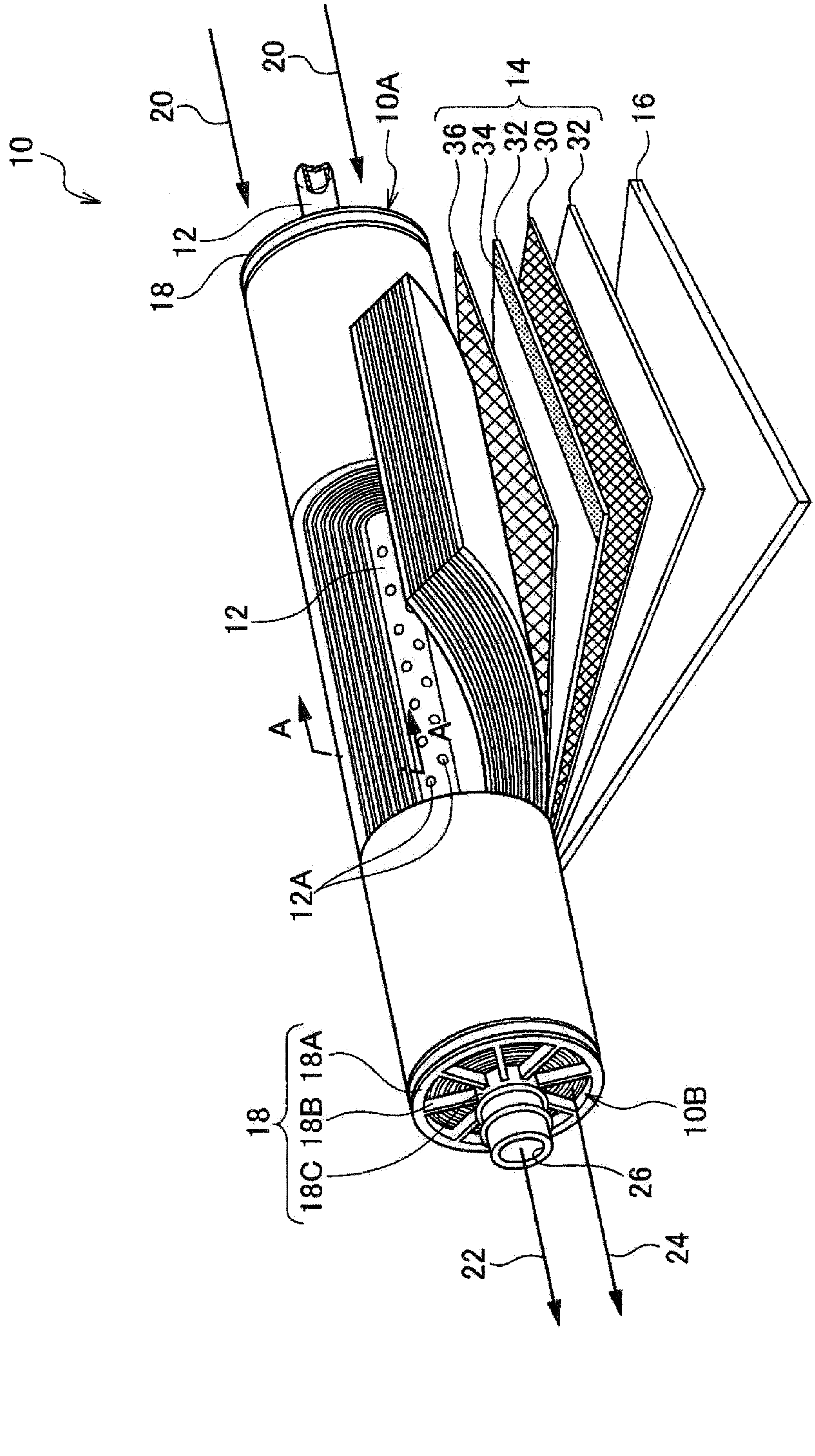
10
20
20
10A
12
18
14
36
34
32
30
32
16
12
A
A
12A
18
18C
18B
18A
10B
26
22
24

FIg 2

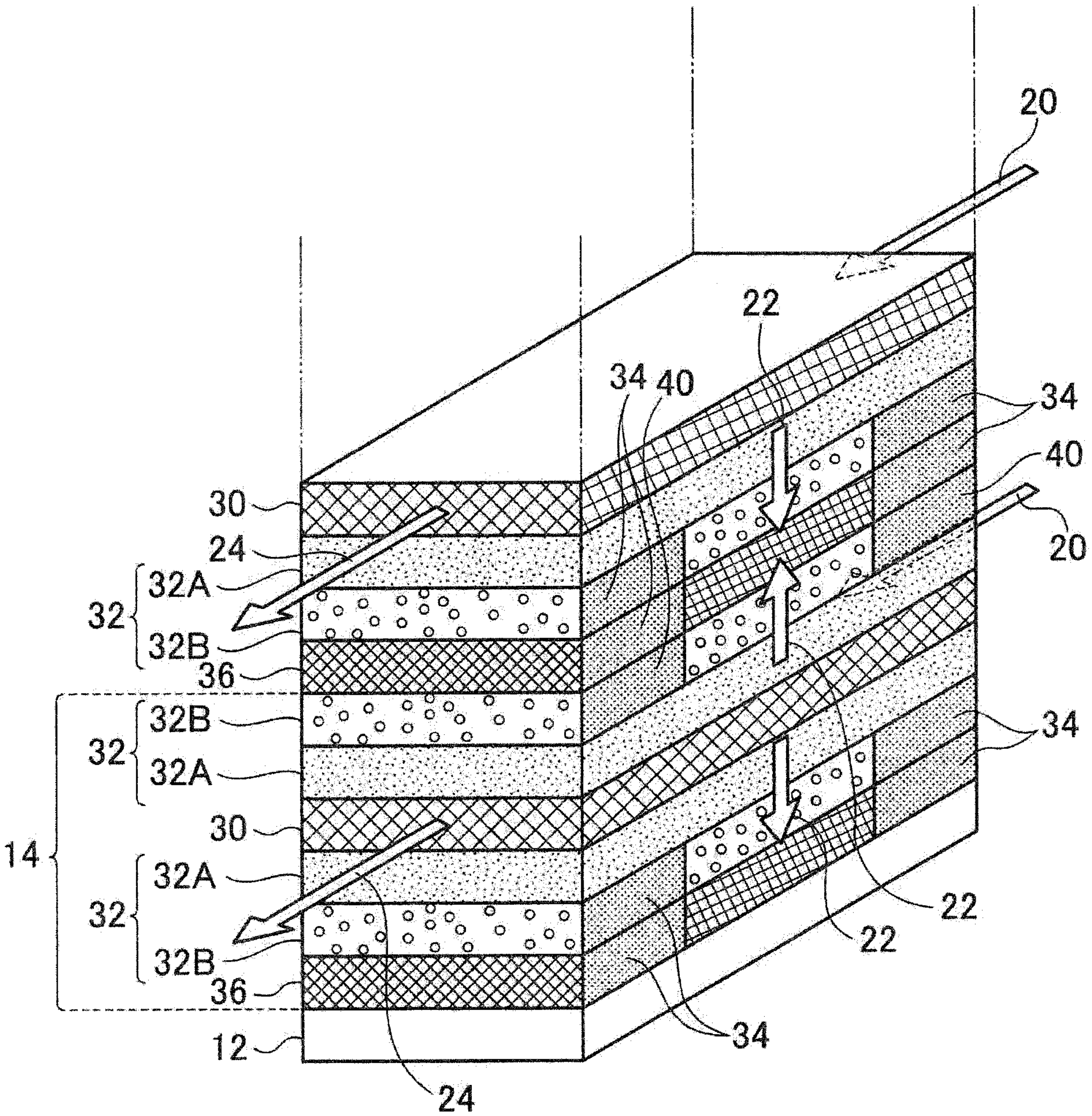
20
22
34
40
34
40
20
30
24
32A
32
32B
36
32B
32
32A
30
14
32A
32
32B
36
12
24
34
22
22
34

Fig 3

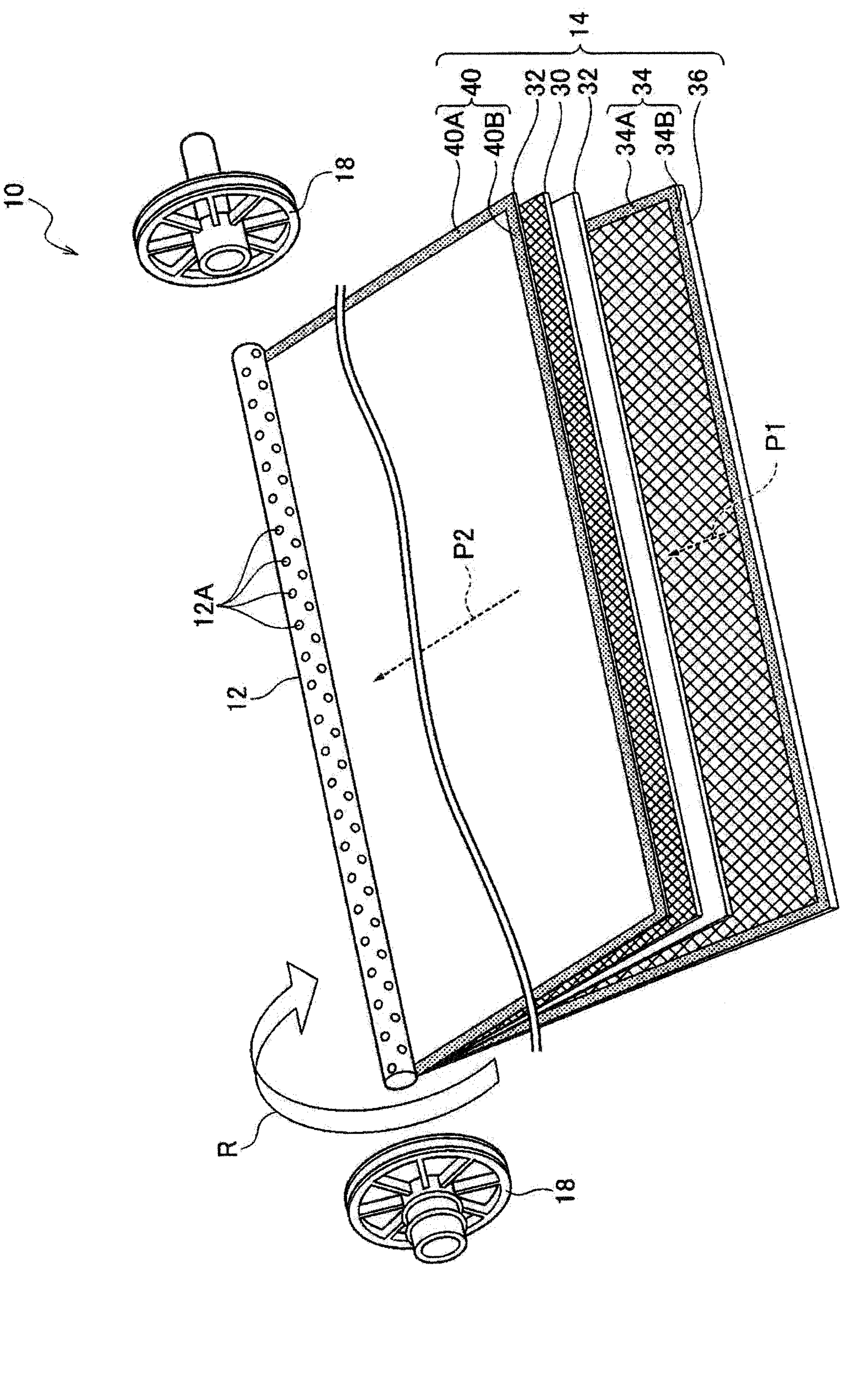

Fig 4 A

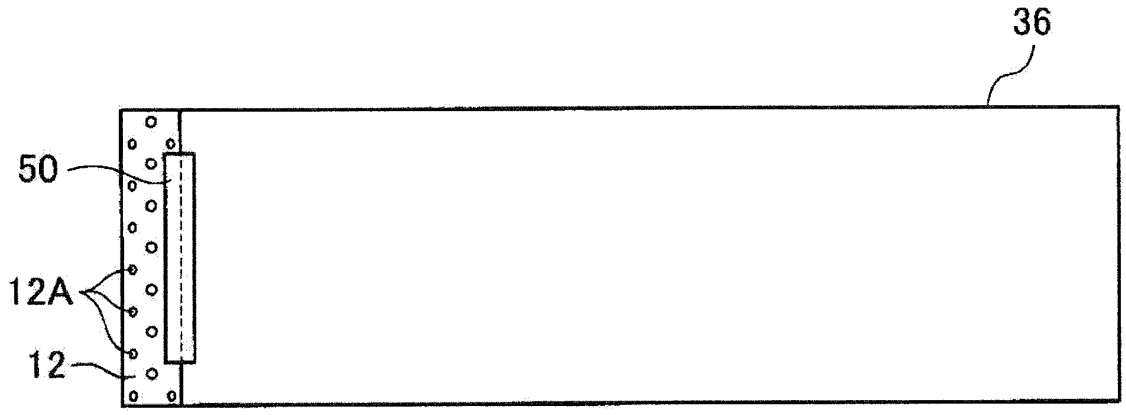


Fig 4 B

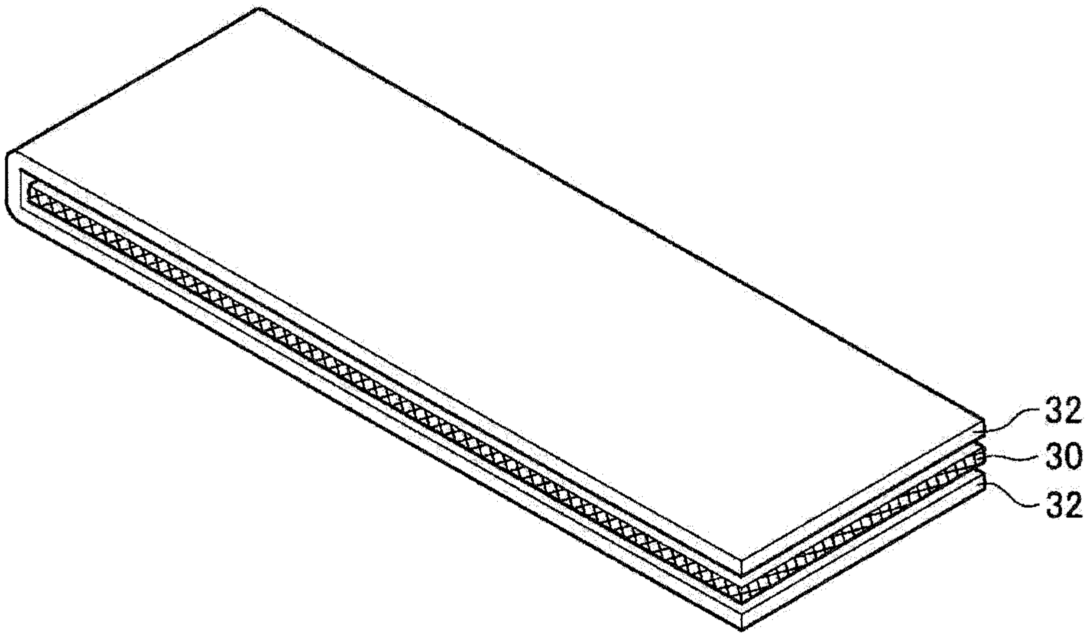

Fig 4 C

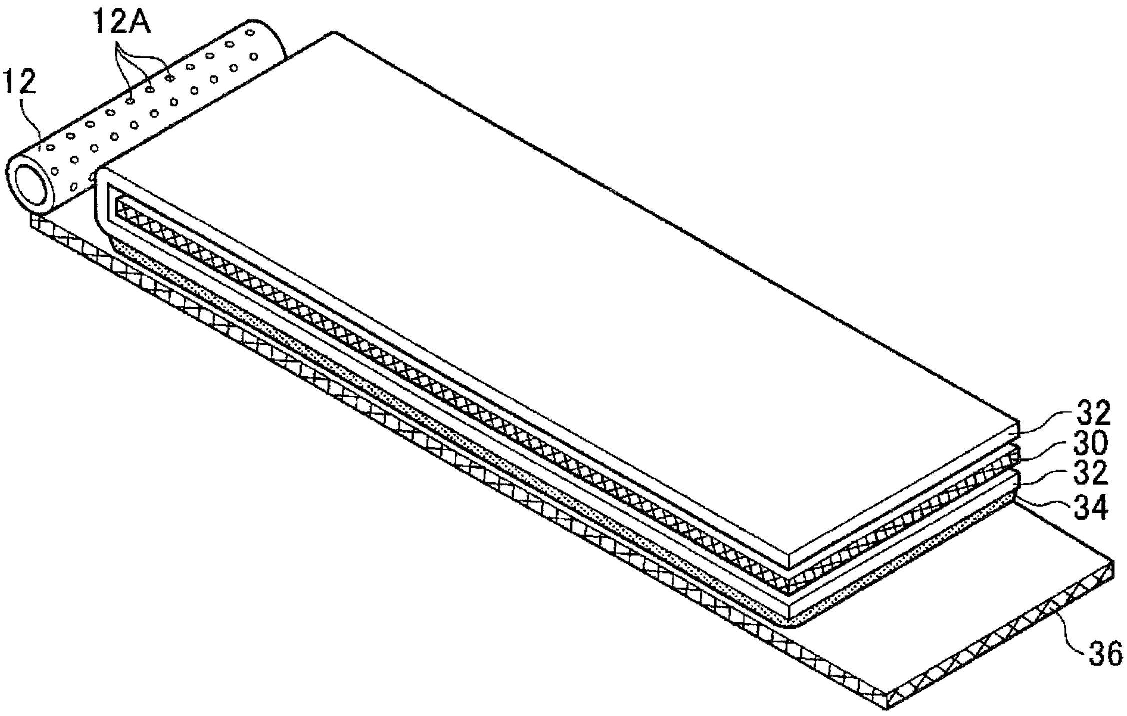

Fig 5

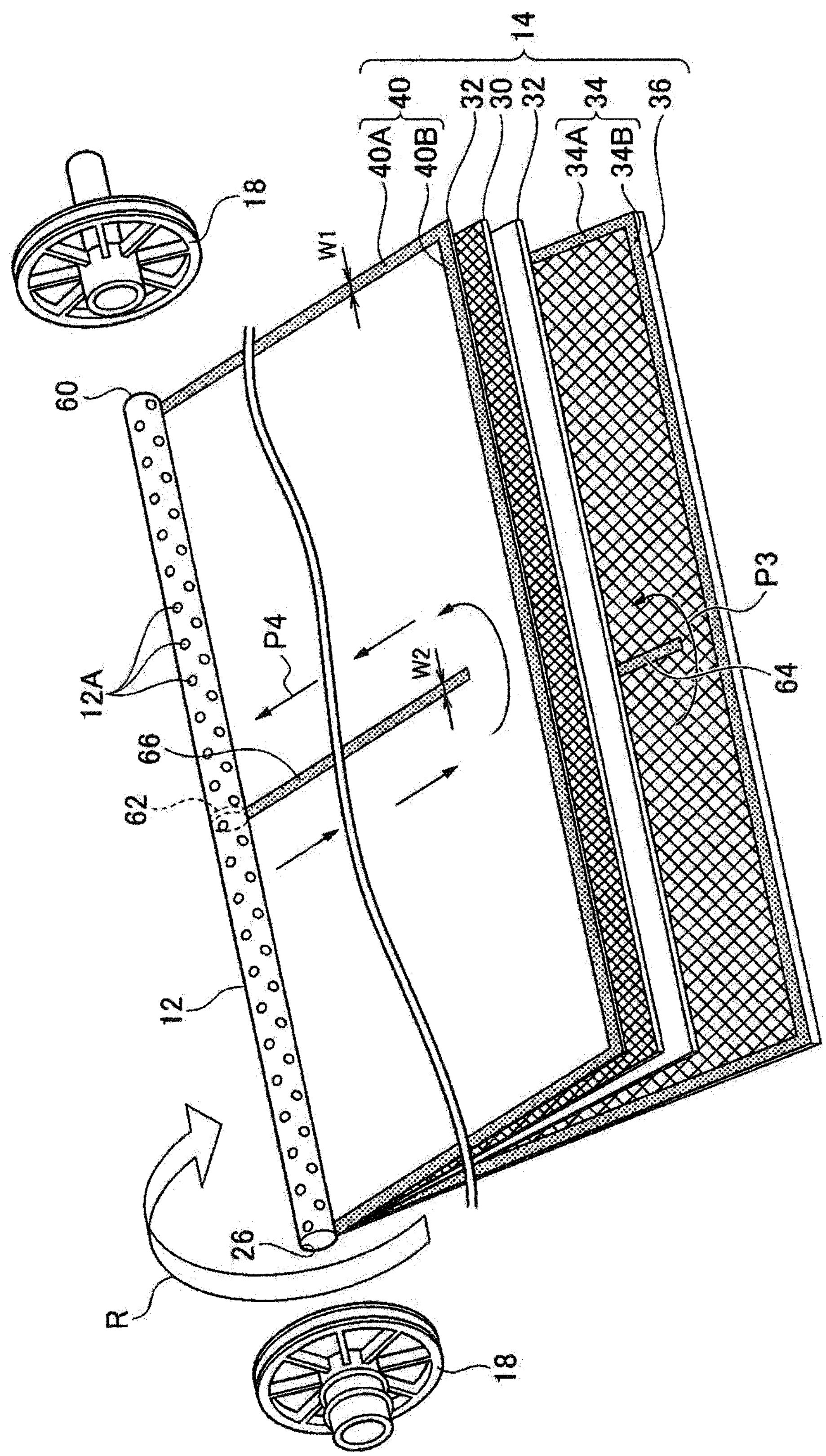
100
14
40
40A
40B
32
30
32
34
34A
34B
36
18
W1
60
12A
P4
W2
P3
64
66
62
12
26
R
18

Fig 6

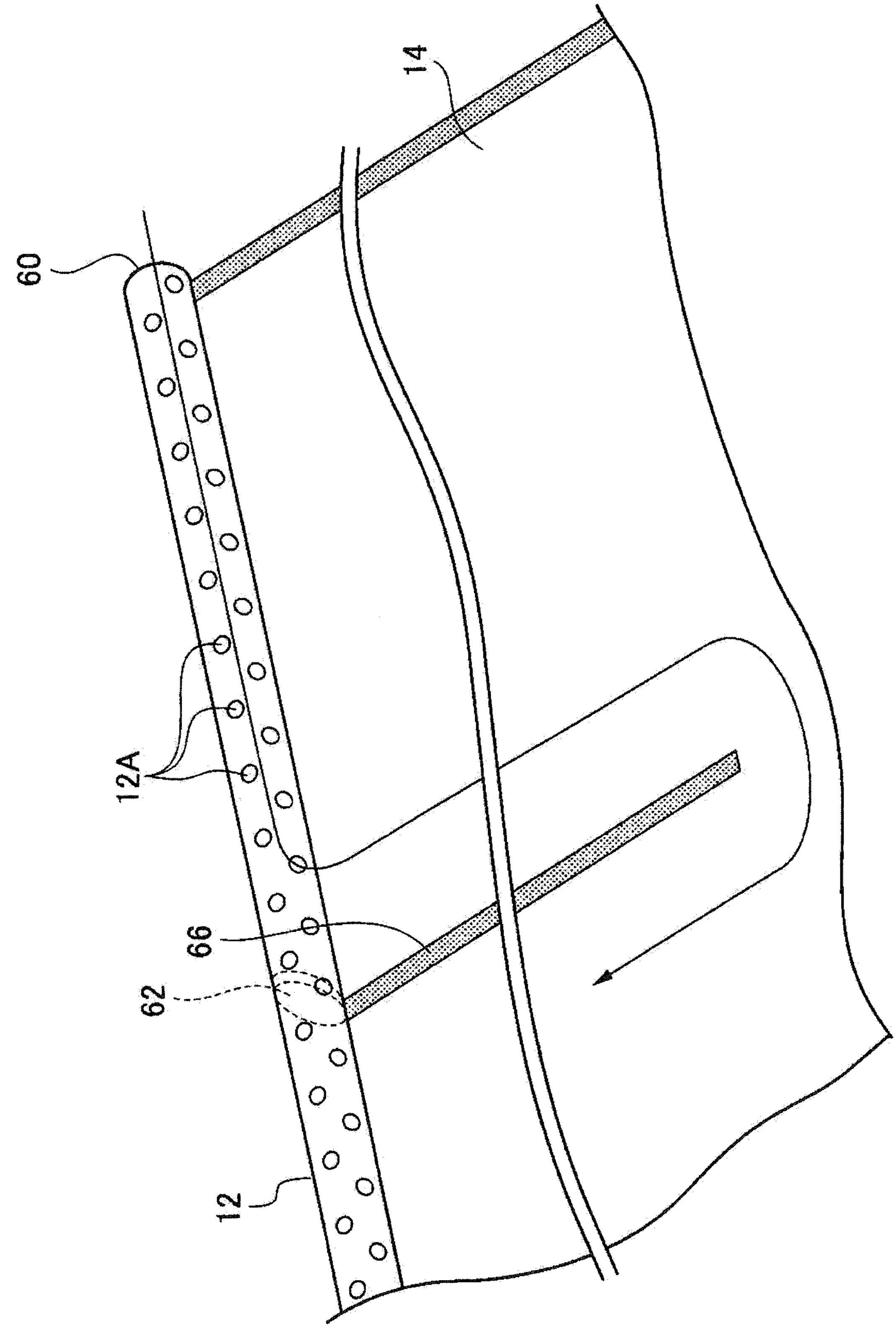

Fig7

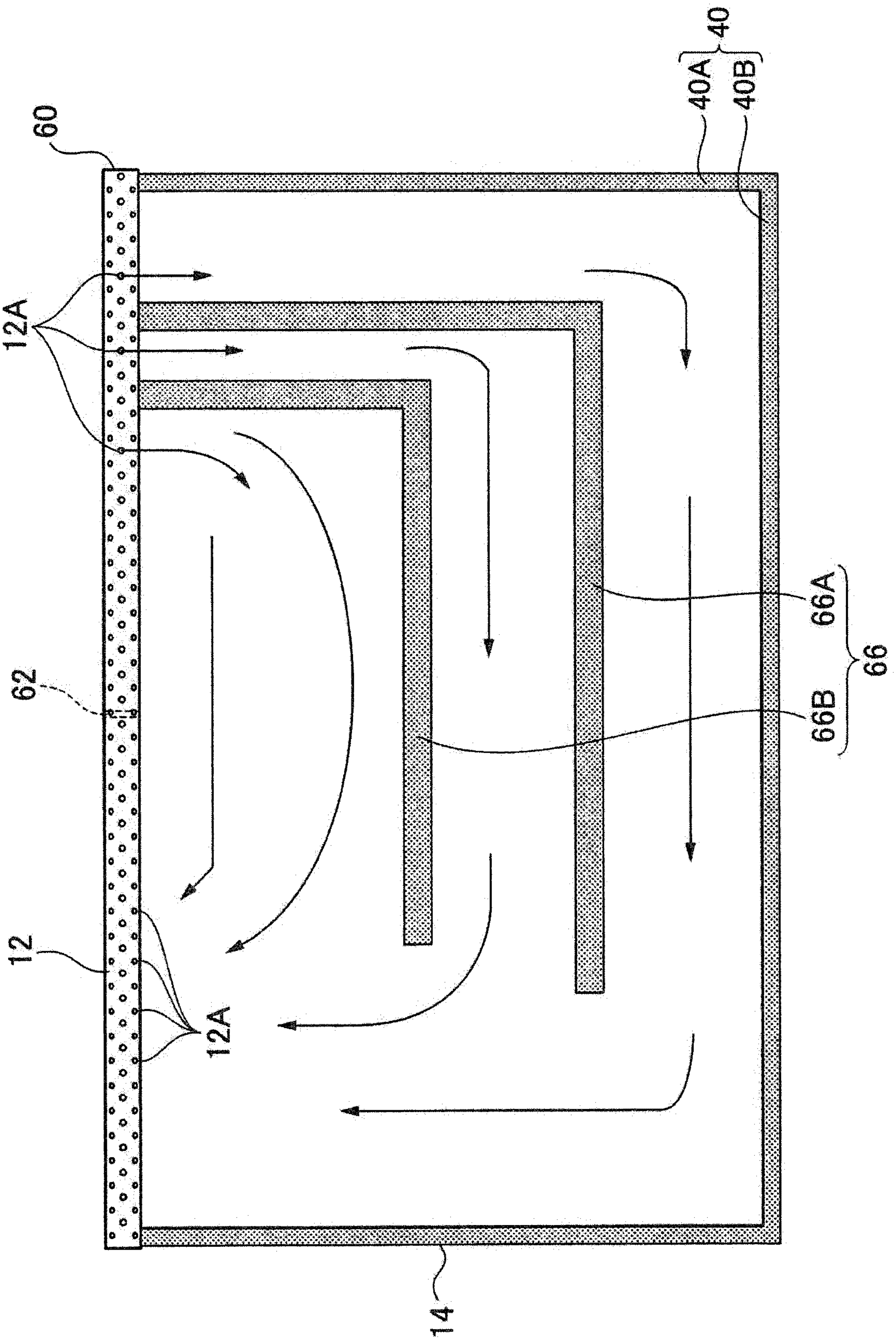

FIg 8

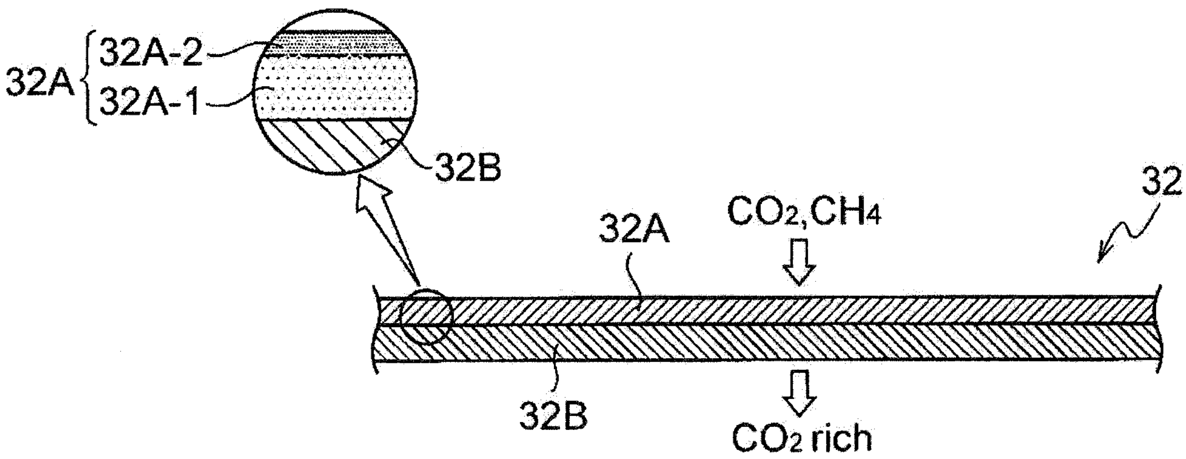

FIg 9

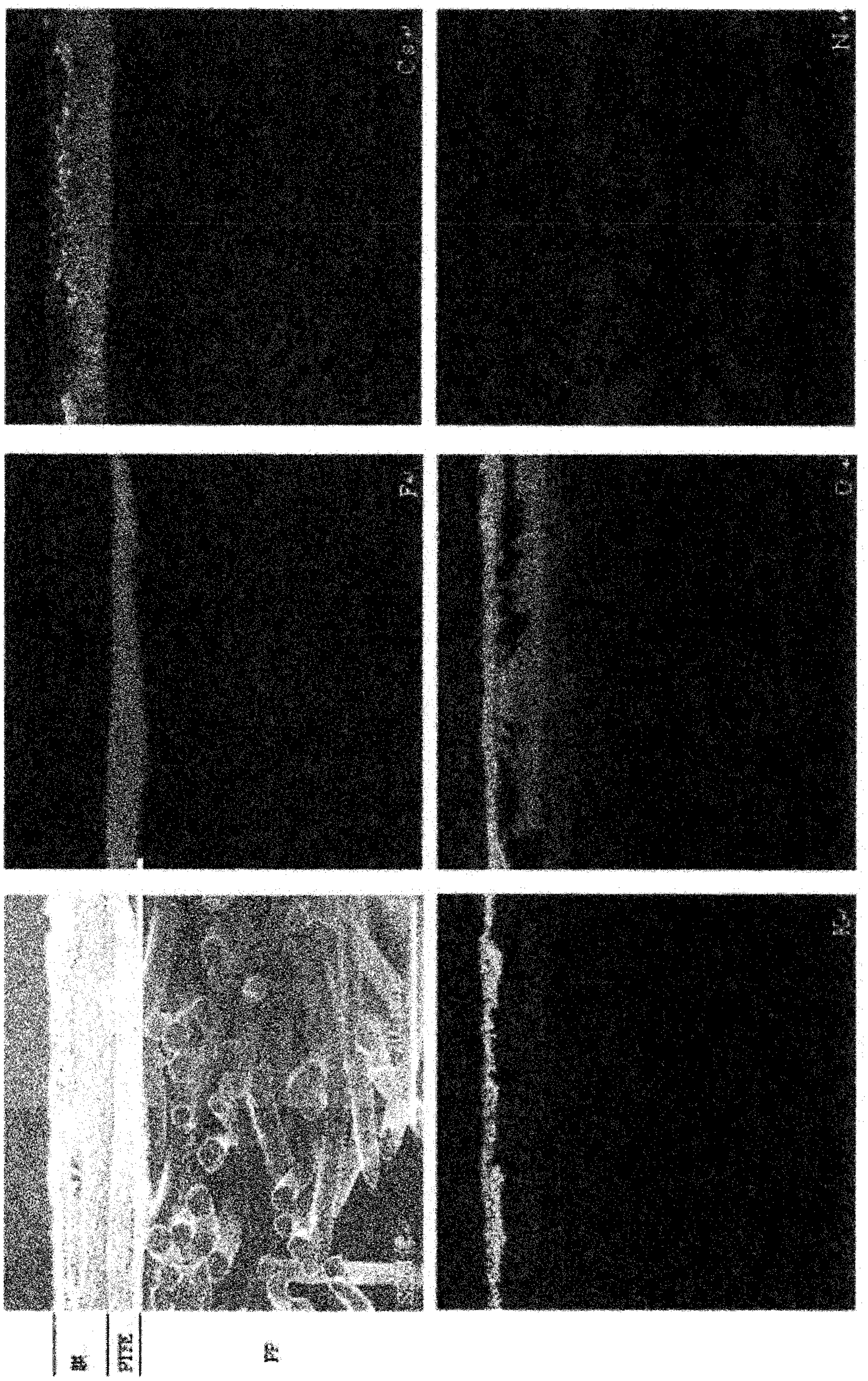

**INTERNATIONAL SEARCH REPORT**

International application No.
PCT/JP2013/066634

A. CLASSIFICATION OF SUBJECT MATTER
*B01D53/22*(2006.01)i, *B01D63/00*(2006.01)i, *B01D63/10*(2006.01)i, *B01D69/00*(2006.01)i, *B01D69/10*(2006.01)i

According to International Patent Classification (IPC) or to both national classification and IPC

B. FIELDS SEARCHED

Minimum documentation searched (classification system followed by classification symbols)
B01D53/22, B01D63/00, B01D63/10, B01D69/00, B01D69/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-195900 A (Renaissance Energy Research Corp.), 03 September 2009 (03.09.2009), claims 1, 5; paragraphs [0068] to [0078], [0115] to [0118] (Family: none) | 1-6,8-10<br>7,11-25 |
| Y | JP 2005-40753 A (Shikoku Research Institute Inc.), 17 February 2005 (17.02.2005), claim 2; paragraphs [0011], [0054] to [0055] (Family: none) | 7,11-25 |
| A | JP 5-131123 A (Nitto Denko Corp.), 28 May 1993 (28.05.1993), claim 1; fig. 1 (Family: none) | 1-10 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 July, 2013 (01.07.13) | 16 July, 2013 (16.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/066634

C (Continuation). DOCUMENTS CONSIDERED TO BE RELEVANT

| Category* | Citation of document, with indication, where appropriate, of the relevant passages | Relevant to claim No. |
|---|---|---|
| A | JP 3-249907 A (Toray Industries, Inc.), 07 November 1991 (07.11.1991), page 1, lower left column, lines 6 to 14; fig. 1 to 6 & US 5154832 A & EP 448973 A1 & KR 10-0161292 B | 1-10 |
| A | JP 2012-41437 A (Kuraray Co., Ltd.), 01 March 2012 (01.03.2012), paragraph [0024] (Family: none) | 5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H4215824 A
- JP 4621295 B
- JP 2009082850 A
- JP H1180315 A
- JP H368428 A
- JP 2012139001 A
- JP 2012198702 A
- JP 2013067015 A